# EUROPÄISCHE PATENTSCHRIFT

(11) **EP 4 357 657 B1**
(45) Veröffentlichungstag und Bekanntmachung des Hinweises auf die Patenterteilung: **21.05.2025**
(21) Anmeldenummer: 23204273.9
(22) Anmeldetag: 18.10.2023
(51) Int. Cl.: F16L 55/38, F16L 55/46, E04G 21/04, B08B 9/055, F16L 101/12

(54) **VENTILEINRICHTUNG, BAUMASCHINE UND VERFAHREN**
VALVE DEVICE, CONSTRUCTION MACHINE AND METHOD
DISPOSITIF DE SOUPAPE, MACHINE DE CONSTRUCTION ET PROCÉDÉ

(30) Priorität: 21.10.2022 DE 102022211187
(43) Veröffentlichungstag der Anmeldung: 24.04.2024
(73) Patentinhaber: Putzmeister Engineering GmbH, 72631 Aichtal (DE)
(72) Erfinder: Kandler, Andreas, 73760 Ostfildern (DE); Briem, Michael, 73760 Ostfildern (DE); Weimer, Ralf, 70597 Stuttgart (DE)
(74) Vertreter: Patentanwälte Ruff, Wilhelm, Beier, Dauster & Partner mbB

(56) Entgegenhaltungen:
- DE-A1- 102006 020 776
- DE-A1- 4 436 247
- DE-U1- 8 708 749
- US-A- 5 103 524

## Beschreibung

### ANWENDUNGSGEBIET UND STAND DER TECHNIK

Die Erfindung betrifft eine Ventileinrichtung, insbesondere Molchlader, zum Anfügen an eine Dickstoff-Förderleitung einer Baumaschine zum Fördern von Dickstoff sowie eine derartige Baumaschine mit einer solchen Ventileinrichtung. Außerdem betrifft die Erfindung ein Verfahren zum, insbesondere automatischen, Reinigen einer derartigen Baumaschine.

Aus der DE 44 36 247 A1 ist eine Anordnung zum Reinigen von Dickstoff-Förderrohren bekannt. Die DE 87 08 749 U1 offenbart eine Einrichtung zum Ein- und Ausschleusen von Rohrreinigungsmolchen in Förderleitungen.

### AUFGABE UND LÖSUNG

Es ist eine Aufgabe der Erfindung, eine Ventileinrichtung, eine Baumaschine mit einer derartigen Ventileinrichtung und ein Verfahren zum Reinigen einer derartigen Baumaschine zu schaffen, die verbesserte Eigenschaften aufweisen.

Diese Aufgabe wird durch die Gegenstände der unabhängigen Patentansprüche gelöst. Bevorzugte Ausführungsformen sind Gegenstand der abhängigen Patentansprüche.

Eine erfindungsgemäße Ventileinrichtung dient zum Anfügen an eine Dickstoff-Förderleitung einer Baumaschine zum Fördern von Dickstoff. Die Ventileinrichtung kann an die Dickstoff-Förderleitung angeschlossen werden. Die Ventileinrichtung kann als Molchlader ausgebildet sein. Die Ventileinrichtung weist einen Basiskörper und einen relativ zum Basiskörper zwischen einer ersten Schaltstellung und einer zweiten Schaltstellung verstellbaren Stellkörper auf. Der Stellkörper kann schieberartig ausgebildet sein. Es ist denkbar, dass der Stellkörper drehschieberartig oder revolverartig ausgebildet ist. Die Ventileinrichtung weist ferner eine automatische, insbesondere aktive, Übertragungseinrichtung mit einem Aufnahmeraum zum Aufnehme einer Medientrenneinrichtung auf. "Aktiv" kann "angetrieben" oder "antreibbar" bedeuten. Die Medientrenneinrichtung kann einen Molch umfassen. Die Medientrenneinrichtung kann mehrere Molche umfassen, die nebeneinander angeordnet sind, um ein Molchpaket der Medientrenneinrichtung auszubilden. Der Basiskörper weist einen ersten Anschluss und einen zweiten Anschluss auf. Der erste Anschluss dient einem Anschließen an eine Pumpseite der Baumaschine, insbesondere an eine von Dickstoff durchfließbare pumpseitige Dickstoff-Pumpleitung der Baumaschine. Der Stellkörper hat einen dritten Anschluss zum Anschließen der Dickstoff-Förderleitung der Baumaschine. Dabei sind der zweite Anschluss und der Aufnahmeraum aneinander angeschlossen. Mit anderen Worten: Die automatische Übertragungseinrichtung ist an den zweiten Anschluss angeschlossen. In der ersten Schaltstellung sind der erste Anschluss und der dritte Anschluss für einen Fluss mindestens von Dickstoff zwischen dem ersten Anschluss und dem dritten Anschluss miteinander verbunden. "Mindestens von Dickstoff" kann dabei bedeuten, dass zusätzlich zu dem Dickstoff andere Medien und/oder Einrichtungen durch den ersten Anschluss und den dritten Anschluss treten können. In der ersten Schaltstellung können der erste Anschluss und der dritte Anschluss nacheinander, also in der Art einer Reihenschaltung, von Dickstoff und/oder Flüssigkeit und/oder einem Gemisch aus Flüssigkeit und Dickstoff durchströmt werden. In der zweiten Schaltstellung sind der zweite Anschluss und der dritte Anschluss für eine automatische Übertragung der Medientrenneinrichtung zwischen dem dritten Anschluss und der Übertragungseinrichtung, insbesondere über den zweiten Anschluss, miteinander verbunden. In der zweiten Schaltstellung kann also die Medientrenneinrichtung von dem Aufnahmeraum durch den zweiten Anschluss hindurch in den dritten Anschluss übertragen werden. Vorteilhaft ermöglicht es die Ventileinrichtung, die Dickstoff-Förderleitung in der ersten Schaltstellung mit der Pumpseite der Baumaschine zu verbinden, beispielsweise für einen Dickstoff-Förderbetrieb der Baumaschine. Demgegenüber kann die Pumpseite in der zweiten Schaltstellung von der Dickstoff-Förderleitung getrennt werden, um die Medientrenneinrichtung an einer von der Ventileinrichtung ausgebildeten Trennstelle in die Dickstoff-Förderleitung zu übertragen. Dies kann vorteilhaft automatisch geschehen, so dass auf eine aufwändige, manuelle Reinigung der Dickstoff-Förderleitung verzichtet werden kann. Insbesondere kann auf ein manuelles Beladen der Dickstoff-Förderleitung mit der Medientrenneinrichtung verzichtet werden. Es ergibt sich ein zuverlässig ausführbarer Reinigungsprozess, der insbesondere frei von bedienerbedingten Fehlermöglichkeiten sein kann. Jeder Anschluss kann einen Fluidkanal begrenzen.

Der Begriff "konfiguriert" kann für den Begriff "ausgebildet" synonym verwendet werden.

Der Begriff "umfasst" oder "hat" kann für den Begriff "aufweist" synonym verwendet werden.

Der Dickstoff kann ein Baustoff sein. Der Dickstoff kann eine breiartige Mischung unterschiedlicher Stoffe sein. Der Dickstoff kann Mörtel, Zement, Estrich oder Beton, jeweils in einem misch- und/oder förderfähigen Zustand, sein. Im misch- und/oder förderfähigen Zustand ist der Dickstoff noch nicht ausgehärtet oder abgebunden.

Zweckmäßig weist die Ventileinrichtung einen Antrieb auf, der zum Verstellen des Basiskörpers und des Stellkörpers relativ zueinander zwischen den beiden Schaltstellungen eingerichtet ist. Der Antrieb kann automatisch kontrollierbar sein. Auf diese Weise kann die Verstellung von Basiskörper und Stellkörper relativ zueinander vorteilhaft, insbesondere mittels einer Kontrolleinrichtung der Baumaschine, automatisch erfolgen.

In Ausgestaltung der Erfindung weist der Basiskörper einen vierten Anschluss auf. Der vierte Anschluss des Basiskörpers kann ungenutzt sein. Alternativ weist der Stellkörper einen vierten Anschluss auf, wobei der vierte Anschluss des Stellkörpers in der zweiten Schaltstellung mit dem ersten Anschluss und in der ersten Schaltstellung dem Basiskörper zugewandt mit einer äußeren Umgebung der Ventileinrichtung verbunden ist. Der vierte Anschluss kann also entweder am Stellkörper oder am Basiskörper vorhanden sein. Vorteilhaft kann an dem vierten Anschluss eine weitere Übertragungseinrichtung angeschlossen werden, mittels welcher eine weitere Medientrenneinrichtung in eine dickstoffführende Leitung der Baumaschine einbringbar ist.

In weiterer Ausgestaltung der Erfindung weist der Stellkörper einen fünften Anschluss auf. Dabei ist der fünfte Anschluss in der ersten Schaltstellung mit dem zweiten Anschluss verbunden, wobei an dem fünften Anschluss eine zusätzliche Dickstoff-Förderleitung der Baumaschine angeschlossen sein kann oder der fünfte Anschluss ungenutzt sein kann. Alternativ ist der fünfte Anschluss in der ersten Schaltstellung mit einem vierten Anschluss des Basiskörpers und in der zweiten Schaltstellung mit dem ersten Anschluss verbunden. Die Ventileinrichtung mit einem fünften Anschluss ist besonders flexibel einsetzbar, insbesondere in einem Leistungssystem der Baumschiene mit mehreren Dickstoff-Förderleitungen.

In weiterer Ausgestaltung der Erfindung weist die Ventileinrichtung eine weitere, insbesondere passive, Übertragungseinrichtung auf. "Passiv" kann dabei "nicht antreibbar" oder "nicht angetrieben" bedeuten. Die weitere Übertragungseinrichtung hat einen weiteren Aufnahmeraum zum Aufnehmen einer weiteren Medientrenneinrichtung, insbesondere eines Molchs. Die weitere Medientrenneinrichtung kann der vorstehend bereits erläuterten Medientrenneinrichtung entsprechen. Der vierte Anschluss oder der fünfte Anschluss ist an den weiteren Aufnahmeraum angeschlossen, so dass die weitere Medientrenneinrichtung zwischen dem weiteren Aufnahmeraum und dem vierten Anschluss oder dem fünften Anschluss zur Pumpseite hin übertragbar ist. Auf diese Weise lässt sich vorteilhaft die weitere Medientrenneinrichtung in eine pumpseitig vorhandene Dickstoff-Pumpleitung der Baumaschine übertragen. Somit kann jeweils eine Medientrenneinrichtung in der Dickstoff-Förderleitung und in der pumpseitig vorhandenen Dickstoff-Pumpleitung angeordnet werden. Alle Übertragungseinrichtungen können gleichartig oder verschiedenartig ausgebildet sein. Die Übertragungseinrichtung und wenigstens eine weitere Übertragungseinrichtung können aktiv ausgebildet sein.

In weiterer Ausgestaltung der Erfindung weist die Übertragungseinrichtung ein Gehäuse auf, wobei das Gehäuse den Aufnahmeraum der Übertragungseinrichtung, insbesondere flüssigkeits- und/oder dickstoffdurchlässig, begrenzt. Das Gehäuse kann vorteilhaft eine Positionierung der Medientrenneinrichtung in dem Aufnahmeraum sicherstellen. Das Gehäuse kann zudem den Aufnahmeraum und/oder eine darin angeordnete Medientrenneinrichtung gegenüber einer äußeren Umgebung der Ventileinrichtung abschirmen.

Gemäß der Erfindung weist die Übertragungseinrichtung einen Kolben auf. Der Kolben ist in dem Aufnahmeraum relativ zu dem Gehäuse der Übertragungseinrichtung derart verstellbar geführt, dass, insbesondere in der zweiten Schaltstellung, die Medientrenneinrichtung durch Verstellen des Kolbens relativ zum Gehäuse aus dem Aufnahmeraum heraus übertragbar ist. Der Kolben kann also eine Verstellkraft auf die Medientrenneinrichtung übertragen. Insbesondere weist die Übertragungseinrichtung eine Sensoreinrichtung zur Detektion wenigstens einer Kolbenstellung des Kolbens relativ zu dem Gehäuse auf. Mittels der Sensoreinrichtung kann vorzugsweise eine erste Kolbenendstellung und eine zweite Kolbenendstellung des Kolbens sowie - alternativ oder zusätzlich - eine Zwischenstellung des Kolbens zwischen den Kolbenendstellungen relativ zu dem Gehäuse detektiert werden. Alternativ oder zusätzlich weist die Übertragungseinrichtung insbesondere eine Antriebseinrichtung auf, wobei die Antriebseinrichtung zum automatischen, insbesondere linearen, Verstellen des Kolbens relativ zu dem Gehäuse ausgebildet ist. Die Antriebseinrichtung kann einen Hydraulikzylinder sowie - alternativ oder zusätzlich - einen Spindeltrieb aufweisen. Es ist denkbar, dass die Antriebseinrichtung elektrisch antreibbar ist. In der Zwischenstellung des Kolbens kann die Medientrenneinrichtung mittels des Kolbens aus dem Aufnahmeraum heraus verstellt sein. In der Zwischenstellung kann die Medientrenneinrichtung in dem Anschluss, an welchem die Übertragungseinrichtung angeschlossen ist, angeordnet sein. Somit kann dieser Anschluss mittels der Medientrenneinrichtung gegenüber der äußeren Umgebung der Ventileinrichtung fluiddicht verschlossen sein. Wird nun dieser Anschluss mit der Dickstoff-Förderleitung durch Verstellen des Stellkörpers verbunden, kann vorteilhaft vermieden werden, dass Dickstoff aus der Dickstoff-Förderleitung über diesen Anschluss in die äußere Umgebung gelangt.

Gemäß der Erfindung ist der Kolben relativ zu einem Gehäuse der Übertragungseinrichtung zwischen einer ersten und einer zweiten Kolbenstellung entlang einer Stellrichtung verstellbar. Dabei ist der Kolben in der ersten Kolbenstellung entlang der Stellrichtung im Abstand zu dem an den Aufnahmeraum angeschlossenen Anschluss angeordnet. Der Kolben ist demgegenüber in der zweiten Kolbenstellung entlang der Stellrichtung in dem jeweiligen Anschluss derart aufgenommen, dass dieser Anschluss fluiddicht mittels des Kolbens von dem Aufnahmeraum getrennt ist. Insbesondere schließt der Kolben in der zweiten Kolbenstellung entlang der Stellrichtung bündig mit einer Trennfläche der Ventileinrichtung ab, wobei der Basiskörper und der Stellkörper einander gleitbeweglich in der Trennfläche berühren. In der Trennfläche kann zwischen Kolben und dem jeweiligen Anschluss, in welchem der Kolben aufgenommen ist, ein fluiddurchlässiger Durchgang ausgebildet sein. Mit anderen Worten: der fluiddichte Verschluss des jeweiligen Anschlusses mittels des Kolbens in der zweiten Kolbenstellung kann im Abstand zur Trennfläche ausgebildet sein. Durch den fluiddichten Verschluss des jeweiligen Anschlusses mittels des Kolbens in seiner zweiten Kolbenstellung kann zwischen der mittels des Kolbens verstellten Medientrenneinrichtung und der durch den Kolben ausgebildeten Abdichtungsstelle ein Zwischenraum ausgebildet werden, der mittels eines Fluidkanals mit Flüssigkeit befüllt werden kann. Wird diese Flüssigkeit in dem Zwischenraum mit Druck beaufschlagt, lässt sich die Medientrenneinrichtung durch den Flüssigkeitsdruck vom Kolben weg verstellen.

Zweckmäßig weist der Anschluss, an welchem die Übertragungseinrichtung mit Kolben vorhanden ist, eine an einem der Übertragungseinrichtung zugewandten Anschlussende innenseitig umlaufende Einführfase auf. Diese Einführfase kann einer Zentrierung der Medientrenneinrichtung dienen. An dem Kolben kann eine Dichtmanschette angeordnet sein, die eine umlaufende Dichtlippe aufweist. Die Dichtmanschette kann in der zweiten Kolbenstellung innenseitig an dem betreffenden Anschluss angelegt sind, um diesen Anschluss fluiddicht zu verschließen. Die Einführfase kann dazu dienen, dass die Dichtlippe materialschonend und verschleißarm in den jeweiligen Anschluss einführbar ist, um sich dort innenseitig anzulegen. An dem Kolben kann zudem ein Stößel angeordnet sein, mittels welchem die Medientrenneinrichtung verstellbar ist. Vorzugsweise ist ein Außendurchmesser des Stößels kleiner als ein Innendurchmesser des betreffenden Anschlusses. Der Stößel kann entlang der Stellrichtung des Kolbens vorzugsweise im Abstand zu der Dichtmanschette enden. Die Dichtmanschette kann aus einem elastischen Material hergestellt sein. Das elastische Material kann ein Elastomer und/oder ein Gummiwerkstoff sein. Das elastische Material kann eine Verstärkung aufweisen. Die Dichtlippe kann bei Beaufschlagung mit Fluiddruck radial gegen eine Innenseite des jeweiligen Anschlusses gedrückt werden. Hierdurch kann ein besonders druckbeständiger Verschluss des jeweiligen Anschlusses in der zweiten Kolbenstellung erreicht werden.

In weiterer Ausgestaltung der Erfindung weist der Basiskörper einen in den zweiten Anschluss mündenden und von Flüssigkeit durchfließbaren Fluidkanal auf. Insbesondere ist der Fluidkanal mittels einer Pumpeinrichtung der Baumaschine mit Flüssigkeit versorgbar. Die Pumpeinheit ist vorzugsweise von der Dickstoff-Pumpeinheit verschieden. Die Ventileinrichtung kann zudem ein Flüssigkeitsventil aufweisen, wobei der Fluidkanal mittels des Flüssigkeitsventils fluiddicht verschließbar ist, um den Fluidkanal von dem zweiten Anschluss fluiddicht zu trennen. Der in den zweiten Anschluss mündende Fluidkanal ermöglicht ein Beaufschlagen der Medientrenneinrichtung mit Flüssigkeit, um die Medientrenneinrichtung durch die Dickstoff-Förderleitung zu verstellen. Dabei kann die Medientrenneinrichtung unabhängig von der Dickstoff-Pumpeinheit mittels der durch den Fluidkanal geführten Flüssigkeit verstellt werden, so dass die Dickstoff-Pumpeinheit zum Verstellen einer weiteren Medientrenneinrichtung verfügbar ist. Insbesondere kann über den Fluidkanal die Medientrenneinrichtung mit Flüssigkeit beaufschlagt werden, wenn sich der Kolben der Übertragungseinrichtung in seiner zweiten Kolbenstellung befindet.

Zweckmäßig kann der Fluidkanal einen Flüssigkeitssammlerraum aufweisen. An dem Flüssigkeitssammlerraum kann eine Entlüftungseinrichtung angeordnet sein, mittels welcher der Fluidkanal entlüftet werden kann. Zudem kann an dem Flüssigkeitssammlerraum eine Ablasseinrichtung angeschlossen sein, mittels welcher Flüssigkeit aus dem Fluidkanal abgelassen werden kann. Die Entlüftungseinrichtung und/oder die Ablasseinrichtung können automatisch und/oder manuell betätigbar sein. Ohne Entlüftung mittels der Entlüftungsmöglichkeit kann es zu einem Einschluss einer Gasblase, insbesondere einer Luftblase, in der Dickstoff-Förderleitung kommen. Bei Beaufschlagung der Dickstoff-Förderleitung mit Druck kann das Gas der Gasblase komprimiert und in der Art einer Gasfeder vorgespannt werden. Wird die Gasblase nun durch den in der Dickstoff-Förderleitung erzeugten Druck verstellt, kann sich die Vorspannung der Gasblase schlagartig lösen, sobald die Luft- oder Gasblase mit einer äußeren Umgebung druckangleichend in Kontakt kommt. Damit einhergehend kann Dickstoff explosionsartig aus der Dickstoff-Förderleitung beschleunigt werden, was für umstehende Personen gefährlich sein kann.

In weiterer Ausgestaltung der Erfindung weist die Übertragungseinrichtung ein Magazin zum Vorladen von Medientrenneinrichtungen auf. In dem Magazin können mehrere Elemente eines Molchpakets der Medientrenneinrichtung vorgeladen werden. Somit kann auf ein manuelles Einbringen mehrere Elemente, insbesondere eines Molchpakets, der Medientrenneinrichtung in den Aufnahmeraum der Übertragungseinrichtung verzichtet werden.

Eine erfindungsgemäße Baumaschine dient einem Fördern von Dickstoff. Dabei weist die Baumaschine eine von Dickstoff durchfließbare Dickstoff-Förderleitung auf. Zudem weist die Baumaschine eine Pumpseite auf, an welcher insbesondere eine Dickstoff-Pumpleitung der Baumaschine angeordnet ist. Ferner weist die Baumaschine eine Dickstoff-Pumpeinheit auf, an welcher die Pumpseite angeordnet ist. Dabei ist die Dickstoff-Pumpeinheit zum pumpseitigen Versorgen der Dickstoff-Förderleitung mit Dickstoff und/oder Flüssigkeit ausgebildet. Außerdem weist die Baumaschine eine erfindungsgemäße Ventileinrichtung wie voranstehend beschrieben auf. Dabei ist die Ventileinrichtung zwischen der Pumpseite und der Dickstoff-Förderleitung, insbesondere zwischen der Dickstoff-Pumpleitung und der Dickstoff-Förderleitung, angeordnet. Die Pumpseite ist an den ersten Anschluss für einen Fluss von Dickstoff angeschlossen. Die Dickstoff-Förderleitung ist an den dritten Anschluss für einen Fluss von Dickstoff angeschlossen. Die vorstehend erläuterten Vorteile der erfindungsgemäßen Ventileinrichtung übertragen sich auch auf die erfindungsgemäße Baumaschine mit einer derartigen Ventileinrichtung.

Zweckmäßig weist die Baumaschine mehrere Übertragungseinrichtungen auf, mittels welcher mehrere Förderleitungen der Baumaschine mit Medientrenneinrichtungen beladen werden können. Somit kann ein Förderleitungssystem der Baumaschine mit den mehreren Förderleitungen mittels der Übertragungseinrichtungen automatisch mit Medientrenneinrichtungen versorgt werden.

Ein erfindungsgemäßes Verfahren dient zum, insbesondere automatischen, Reinigen einer erfindungsgemäßen Baumaschine wie voranstehend beschrieben. Die vorstehend aufgezeigten Vorteile der erfindungsgemäßen Baumaschine lassen sich mittels des Verfahrens ausnutzen. Das Verfahren weist einen Schritt a) auf, gemäß welchem der Stellkörper von seiner ersten Schaltstellung in seine zweite Schaltstellung relativ zum Basiskörper verstellt wird. Das Verfahren weist zudem einen Schritt b) auf, der zeitlich nach Durchführung des Schritts a) durchgeführt wird. Gemäß dem Schritt b) wird eine Medientrenneinrichtung von der Übertragungseinrichtung in den dritten Anschluss übertragen, so dass die Medientrenneinrichtung an oder in der Dickstoff-Förderleitung angeordnet wird. Das Verfahren weist außerdem einen Schritt c) auf, der zeitlich nach Durchführung des Schritts b) durchgeführt wird. Gemäß dem Schritt c) wird ein über die Medientrenneinrichtung abfallendes Druckgefälle erzeugt, um die Medientrenneinrichtung unter Verdrängung von in dem dritten Anschluss und/oder in der Dickstoff-Förderleitung befindlichem Dickstoff relativ zur Ventileinrichtung durch die Dickstoff-Förderleitung hindurch entlang des Druckgefälles zu verstellen. Durch das Verstellen der Medientrenneinrichtung durch die Dickstoff-Förderleitung hindurch kann vorteilhaft in der Dickstoff-Förderleitung befindlicher Dickstoff aus der Dickstoff-Förderleitung entfernt werden.

Zweckmäßig wird zeitlich vor Durchführung des Schritts a) die Medientrenneinrichtung aus der Übertragungseinrichtung in den zweiten Anschluss verstellt, so dass der zweite Anschluss mittels der Medientrenneinrichtung fluiddicht verschlossen ist. Somit kann vorteilhaft ein Ausströmen von Dickstoff aus der Dickstoff-Förderleitung über den zweiten Anschluss vermieden werden, wenn der Stellkörper bei Durchführung des Schritts a) in seine zweite Schaltstellung verstellt wird.

In weiterer Ausgestaltung des Verfahrens weist der Schritt b) zusätzlich ein Übertragen einer weiteren Medientrenneinrichtung von einer weiteren Übertragungseinrichtung in den ersten Anschluss auf, so dass die weitere Medientrenneinrichtung an oder in der Pumpseite, insbesondere an oder in einer pumpseitigen Dickstoff-Pumpleitung, angeordnet wird. Der Schritt c) umfasst dabei zusätzlich ein Erzeugen eines über die weitere Medientrenneinrichtung abfallenden Druckgefälles, um die weitere Medientrenneinrichtung unter Verdrängung von in dem ersten Anschluss und/oder pumpseitig vorhandenem Dickstoff relativ zur Ventileinrichtung pumpseitig entlang des Druckgefälles zu verstellen. Somit lässt sich vorteilhaft pumpseitig vorhandener Dickstoff zur Reinigung der Baumaschine von der Pumpseite entfernen.

In weiterer Ausgestaltung des Verfahrens wird bei Durchführung des Schritts c) zum Erzeugen des Druckgefälles pumpseitig vorhandener Dickstoff, insbesondere mittels der Dickstoff-Pumpeinheit der Baumaschine, abgesaugt, so dass die weitere Medientrenneinrichtung pumpseitig durch das Absaugen von der Ventileinrichtung weg verstellt wird. Wenn der Dickstoff, insbesondere im Wesentlichen vollständig, pumpseitig abgesaugt worden ist, wird bei Durchführung des Schritts c) die Pumpseite und die pumpseitig angeordnete weitere Medientrenneinrichtung mit einer Flüssigkeit beaufschlagt. Das Beaufschlagen der weiteren Medientrenneinrichtung mit der Flüssigkeit erfolgt vorzugsweise mittels der Dickstoff-Pumpeinheit. Bei der Flüssigkeit kann es sich um Frisch- oder Brauchwasser handeln. Dabei wird die weitere Medientrenneinrichtung derart mit Flüssigkeit beaufschlagt, dass die weitere Medientrenneinrichtung pumpseitig zu der Ventileinrichtung hin zurückverstellt und anschließend über die Ventileinrichtung in die weitere Übertragungseinrichtung befördert wird. Mit anderen Worten: Die weitere Medientrenneinrichtung kann infolge des Absaugens des pumpseitig vorhandenen Dickstoffs mittels der Dickstoff-Pumpeinheit zuerst von der Ventileinrichtung weg verstellt werden, um nach Umkehr einer Pumprichtung der Dickstoff-Pumpeinheit anschließend wieder von der Dickstoff-Pumpeinheit weg zur Ventileinrichtung hin zurückverstellt zu werden. Nachdem die weitere Medientrenneinrichtung durch die Ventileinrichtung hindurch zurückverstellt wurde, kann die weitere Medientrenneinrichtung mittels der weiteren Übertragungseinrichtung aufgefangen werden. Vorteilhaft kann somit über ein- und dieselbe weitere Übertragungseinrichtung die weitere Medientrenneinrichtung sowohl in eine pumpseitig vorhandene Dickstoff-Pumpleitung eingebracht werden als auch nach Reinigung der Dickstoff-Pumpleitung wieder entnommen werden. Auf eine gesonderte Entnahmeeinrichtung an oder in der Nähe der Dickstoff-Pumpeinheit kann somit verzichtet werden.

In weiterer Ausgestaltung des Verfahrens erfolgt bei Durchführung des Schritts c) zeitlich vor dem Verstellen der an der Dickstoff-Förderleitung angeordneten Medientrenneinrichtung ein Verstellen des Stellkörpers von seiner zweiten Schaltstellung in seine erste Schaltstellung relativ zum Basiskörper. Dabei wird zum Verstellen der an der Dickstoff-Förderleitung angeordneten Medientrenneinrichtung durch die Dickstoff-Förderleitung hindurch die Dickstoff-Förderleitung über die Pumpseite und die Ventileinrichtung mit Flüssigkeit beaufschlagt. Dies bietet den Vorteil, dass die Medientrenneinrichtung mittels der Dickstoff-Pumpeinheit mit Flüssigkeit beaufschlagt werden kann, um die Medientrenneinrichtung durch die Dickstoff-Förderleitung zu verstellen. Eine gesonderte Flüssigkeitspumpe kann folglich eingespart werden.

In weiterer Ausgestaltung der Erfindung wird bei Durchführung des Schritts b) der zweite Anschluss der Ventileinrichtung, insbesondere mittels eines Kolbens der an den zweiten Anschluss angeschlossenen Übertragungseinrichtung, von dem Aufnahmeraum der an dem zweiten Anschluss angeschlossenen Übertragungseinrichtung fluiddicht getrennt. Bei Durchführung des Schritts b) wird zudem der zweite Anschluss, insbesondere mittels eines Flüssigkeitsventils der Ventileinrichtung, fluidleitend mit einer Flüssigkeitsleitung der Baumaschine verbunden. Die Flüssigkeitsleitung kann von einer Flüssigkeits-Pumpeinheit der Baumaschine mit Flüssigkeit gespeist werden. Dabei werden bei Durchführung des Schritts c) die Dickstoff-Förderleitung und die darin angeordnete Medientrenneinrichtung über die Flüssigkeitsleitung mit Flüssigkeit beaufschlagt, um das über die Medientrenneinrichtung abfallende Druckgefälle zu erzeugen. Folglich kann die Medientrenneinrichtung unabhängig von der Dickstoff-Pumpeinheit infolge des Beaufschlagens mit Flüssigkeit über die Flüssigkeitsleitung verstellt werden. Die Dickstoff-Pumpeinheit kann dabei zeitgleich dafür genutzt werden, eine weitere Medientrenneinrichtung zu verstellen.

### KURZBESCHREIBUNG DER ZEICHNUNGEN

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind. Dabei beziehen sich gleiche Bezugszeichen auf gleiche oder ähnliche oder funktional gleiche Bauteile.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.
- Fig. 1: zeigt in schematischer Schnittdarstellung eine Ausführungsform einer erfindungsgemäßen Ventileinrichtung, wobei sich ein Kolben einer Übertragungseinrichtung der Ventileinrichtung in einer zweiten Kolbenstellungbefindet,
- Fig. 2: die Ventileinrichtung nach Fig. 1, wobei gegenüber der Darstellung nach Fig. 1 ein Kolben einer Übertragungseinrichtung der Ventileinrichtung in eine erste Kolbenstellungverstellt ist,
- Fig. 3: in anderen Schnittdarstellung die Ventileinrichtung nach den Fig. 1 und 2, wobei sich der Kolben in einer Zwischenstellung befindet,
- Fig. 4: in einer schematischen Schnittdarstellung ein Detail der Ventileinrichtung nach den Fig. 1 bis 3,
- Fig. 5: in schematischer Perspektivdarstellung eine weitere Ausführungsform der erfindungsgemäßen Ventileinrichtung,
- Fig. 6: in schematischer Übersichtsdarstellung eine Ausführungsform einer erfindungsgemäßen Baumaschine mit einer gemäß der Erfindung ausgeführten Ventileinrichtung, wobei die Baumaschine zur Durchführung eines erfindungsgemäßen Verfahrens eingerichtet ist,
- Fig. 7 bis 10: Momentaufnahmen der Baumaschine nach Fig. 6 bei der Durchführung eines erfindungsgemäßen Verfahrens,
- Fig. 11: in schematischer Übersichtsdarstellung eine weitere Ausführungsform der erfindungsgemäßen Baumaschine mit einer gemäß der Erfindung ausgeführten Ventileinrichtung, wobei die Baumaschine zur Durchführung eines erfindungsgemäßen Verfahrens eingerichtet ist, und
- Fig. 12 bis 14: Momentaufnahmen der Baumaschine nach Fig. 11 bei der Durchführung eines erfindungsgemäßen Verfahrens.

### DETAILLIERTE BESCHREIBUNG DER AUSFÜHRUNGSBEISPIELE

Eine erfindungsgemäße Baumaschine 100 ist zum Fördern von Dickstoff D vorgesehen. Der Dickstoff D kann ein Baustoff sein. Der Dickstoff D kann eine breiartige Mischung unterschiedlicher Stoffe sein. Der Dickstoff D kann Mörtel, Zement, Estrich oder Beton, jeweils in einem misch- und/oder förderfähigen Zustand, sein. Im misch- und/oder förderfähigen Zustand ist der Dickstoff D noch nicht ausgehärtet oder abgebunden.

Die Baumaschine 100 weist eine von Dickstoff D durchfließbare Dickstoff-Förderleitung 103 auf. Zudem weist die Baumaschine 100 eine Pumpseite 101 auf. An der Pumpseite 101 ist beispielsweise eine Dickstoff-Pumpleitung 102 der Baumaschine 100 angeordnet. Außerdem weist die Baumaschine 100 eine Dickstoff-Pumpeinheit 105 auf. Die Dickstoff-Pumpeinheit 105 ist an der Pumpseite 101 angeordnet. Dabei ist die Dickstoff-Pumpeinheit 101 zum pumpseitigen Versorgen der Dickstoff-Förderleitung 101 mit Dickstoff D und/oder Flüssigkeit F ausgebildet. Die Baumaschine 100 weist eine erfindungsgemäße Ventileinrichtung 1 auf. Dabei ist die Ventileinrichtung 1 zwischen der Pumpseite 101 und der Dickstoff-Förderleitung 103 angeordnet. Beispielsweise ist die Ventileinrichtung 1 zwischen der Dickstoff-Pumpleitung 102 und der Dickstoff-Förderleitung 103 angeordnet. Die Pumpseite 101 ist an einen ersten Anschluss K1 für einen Fluss von Dickstoff D angeschlossen. Die Dickstoff-Förderleitung 103 ist an einen dritten Anschluss K3 der Ventileinrichtung 1 für einen Fluss von Dickstoff D angeschlossen.

Die Dickstoff-Pumpeinheit 105 kann Förderzylinder mit volumenvariablen Förderräumen aufweisen. Zur, insbesondere gegenläufigen, Änderung der Volumina der Förderräume können die Förderzylinder jeweils einen verstellbaren Förderkolben aufweisen. Die Dickstoff-Pumpeinheit 105 kann zudem ein S-förmig gebogenes S-Rohr umfassen, welches einenends fluidleitend mit einem als Pumpenausgang fungierenden Druckstutzen der Dickstoff-Pumpeinheit 105 verbunden ist. Das S-Rohr kann in einem von oben her mit Dickstoff D befüllbaren Vorratsraum der Dickstoff-Pumpeinheit 105 zum Bevorraten von Dickstoff D angeordnet sein. Dabei kann das S-Rohr innerhalb des Vorratsraums einenends an dem Druckstutzen drehbar gelagert sein. Die volumenvariablen Förderräume können in den Vorratsraum münden. Das S-Rohr kann im Vorratsraum derart relativ zu den Förderräumen verschwenkbar sein, dass es abwechselnd mit einem der Förderräume fluidleitend verbindbar ist. Auf diese Weise kann durch das Gegenspiel des Verschwenkens des S-Rohrs und einer Volumenänderung der Förderräume in dem Vorratsraum befindlicher Dickstoff D mittels der Förderräume abwechselnd angesaugt und über die Förderräume durch das S-Rohr hindurch über den Druckstutzen nach außen gepumpt werden. Ist in dem Vorratsraum eine Flüssigkeit F oder ein Gemisch aus Dickstoff F und Flüssigkeit F vorhanden, so kann auf gleiche Weise die Flüssigkeit F bzw. das Gemisch nach außen gepumpt werden. Eine Pumprichtung der Dickstoff-Pumpeinheit 105 kann umkehrbar ausgebildet sein, so dass Dickstoff D und/oder Flüssigkeit wahlweise in einem Förderbetrieb von der Dickstoff-Pumpeinheit 105 weg und in einem Ansaugbetrieb zur Dickstoff-Pumpeinheit 105 hin gefördert werden kann. Im Vorratsraum der Dickstoff-Pumpeinheit 105 kann ein Rührwerk angeordnet sein.

Die erfindungsgemäße Ventileinrichtung 1 ist zum Anfügen an die Dickstoff-Förderleitung 103 der Baustoffmaschine 100 eingerichtet. Die Ventileinrichtung 1 kann also an die Dickstoff-Förderleitung 103 angeschlossen werden. Bei der Ventileinrichtung 1 kann es sich um einen Molchlader 12 handeln. Die Ventileinrichtung 1 weist einen Basiskörper 2 auf. Zudem weist die Ventileinrichtung 1 einen Stellkörper 3 auf, der relativ zu dem Basiskörper 2 zwischen einer ersten Schaltstellung P1 und einer zweiten Schaltstellung P2 verstellbar ist. Der Stellkörper 3 ist beispielsweise schieberartig ausgebildet sein. Entweder der Basiskörper 2 oder der Stellkörper 3 kann an einem Untergrund befestigt sein. Es ist auch denkbar, dass weder der Basiskörper 2 noch der Stellkörper 3 an dem Untergrund befestigt sind.

Die Ventileinrichtung 1 weist eine automatische, beispielsweise aktive, Übertragungseinrichtung 4, 4a auf. Die Übertragungseinrichtung 4, 4a hat einen Aufnahmeraum 5 zum Aufnehmen einer Medientrenneinrichtung M, M1. Die Medientrenneinrichtung M, M1 kann einen Molch umfassen. Die Medientrenneinrichtung M, M1 kann mehrere Molche umfassen, die hintereinander als Elemente eines Molchpakets der Medientrenneinrichtung M, M1 aufgereiht sind. Ein derartiger Molch kann als Freikolben fungieren, der beispielsweise in der Dickstoff-Förderleitung 103 und/oder in der Dickstoff-Pumpleitung 102 verstellbar ist. Die Baumaschine 100 kann mehrere Übertragungseinrichtungen 4 aufweisen, mittels welcher Medientrenneinrichtung M in mehrere Förderleitungen 103 eingebracht werden können, was in den Figuren jedoch nicht gezeigt ist.

Der Basiskörper 2 der Ventileinrichtung 1 weist einen ersten Anschluss K1 auf, der einem Anschließen an die Pumpseite 101 der Baumaschine 100 dient. Beispielsweise kann der erste Anschluss K1 an die von Dickstoff D durchfließbare pumpseitige Dickstoff-Pumpleitung 102 angeschlossen werden. Zudem weist der Basiskörper 2 einen zweiten Anschluss K2 auf. Der Stellkörper 3 hat einen dritten Anschluss K3 zum Anschließen der Dickstoff-Förderleitung 103 der Baumaschine 100. Dabei sind der zweite Anschluss K2 und der Aufnahmeraum 5 der automatischen Übertragungseinrichtung 4, 4a aneinander angeschlossen. In der ersten Schaltstellung P1 sind der erste Anschluss K1 und der dritte Anschluss K3 für einen Fluss mindestens von Dickstoff D zwischen dem ersten Anschluss K1 und dem dritten Anschluss K3 miteinander verbunden. Demgegenüber sind in der zweiten Schaltstellung P2 der zweite Anschluss K2 und der dritte Anschluss K3 für eine automatische Übertragung der Medientrenneinrichtung M, M1 zwischen dem dritten Anschluss K3 und der Übertragungseinrichtung 4, 4a miteinander verbunden. Die automatische Übertragung der Medientrenneinrichtung M, M1 in der zweiten Schaltstellung P2 ist beispielsweise über den zweiten Anschluss K2, d. h. durch den zweiten Anschluss K2 hindurch, möglich.

Beispielsweise weist der Basiskörper 2 einen vierten Anschluss K4 auf, der ungenutzt sein kann. Alternativ weist der Stellkörper 3 einen vierten Anschluss K4 auf. Wenn der vierte Anschluss K4 an dem Stellkörper 3 vorhanden ist, ist der vierte Anschluss K4 in der zweiten Schaltstellung P2 mit dem ersten Anschluss K1 verbunden. Der vierte Anschluss K4 des Stellkörpers 3 ist in der ersten Schaltstellung P1 dem Basiskörper 2 zugewandt mit einer äußeren Umgebung der Ventileinrichtung 1 verbunden. Der Stellkörper 3 weist beispielsweise einen fünften Anschluss K5 auf. Dabei ist der fünfte Anschluss K5 in der ersten Schaltstellung P1 mit dem zweiten Anschluss K2 verbunden und in der zweiten Schaltstellung P2 ungenutzt. Alternativ ist der fünfte Anschluss K5 in der ersten Schaltstellung P1 mit dem vierten Anschluss K4 des Basiskörpers 2 und in der zweiten Schaltstellung P2 mit dem ersten Anschluss K1 verbunden.

Die Ventileinrichtung 1 weist beispielsweise eine weitere Übertragungseinrichtung 4, 4b auf, die einen weiteren Aufnahmeraum 5 zum Aufnehmen einer weiteren Medientrenneinrichtung M, M2 aufweist. Die weitere Übertragungseinrichtung 4, 4b kann passiv ausgebildet sein. Die weitere Medientrenneinrichtung M, M2 kann in der Art der Medientrenneinrichtung M, M1 ausgebildet sein. "Weiter(e)" bezieht sich dabei nicht auf eine Erstreckung oder Ausdehnung, sondern ist synonym zu "zusätzlich" zu verstehen. Der vierte Anschluss K4 oder der fünfte Anschluss K5 kann an den weiteren Aufnahmeraum 5 angeschlossen sein, so dass die weitere Medientrenneinrichtung M, M2 zwischen dem weiteren Aufnahmeraum 5 und dem vierten Anschluss K4 oder dem fünften Anschluss K5 zur Pumpseite 101 hin übertragbar ist.

Beide Übertragungseinrichtungen 4, 4a, 4b können gleichartig ausgebildet sein. Vorliegend sind die beiden Übertragungseinrichtungen 4, 4a, 4b aber verschiedenartig ausgebildet. Denn die Übertragungseinrichtung 4, 4a ist automatisch antreibbar, also aktiv ausgebildet. Demgegenüber ist die weitere Übertragungseinrichtung 4, 4b nicht antreibbar, also passiv ausgebildet. Die Übertragungseinrichtung 4, 4a weist vorliegend ein Gehäuse 6 auf. Das Gehäuse 6 begrenzt den Aufnahmeraum 5 der Übertragungseinrichtung 4, 4a. Beispielsweise kann der Aufnahmeraum 5 mittels des Gehäuses 6 flüssigkeits- und/oder dickstoffdurchlässig begrenzt sein. Die Übertragungseinrichtung 4, 4a weist vorliegend einen Kolben 7 auf, der in dem Aufnahmeraum 5 relativ zu dem Gehäuse 6 verstellbar geführt ist. Dabei ist der Kolben 7 derart in dem Gehäuse 6 verstellbar, dass in der zweiten Schaltstellung P2 die Medientrenneinrichtung M, M1 durch Verstellen des Kolbens 7 relativ zu dem Gehäuse 6 aus dem Aufnahmeraum 5 heraus übertragbar ist. Die Übertragungseinrichtung 4, 4a kann eine Sensoreinrichtung 8 zur Detektion wenigstens einer Kolbenstellung des Kolbens 7 relativ zu dem Gehäuse 6 aufweisen. Alternativ oder zusätzlich kann die Übertragungseinrichtung 4, 4a eine Antriebseinrichtung 9 aufweisen. Die Antriebseinrichtung 9 kann zum automatischen Verstellen des Kolbens 7 relativ zu dem Gehäuse 6 ausgebildet sein. Dabei kann die Antriebseinrichtung 9 einen Hydraulikzylinder 10 sowie - alternativ oder zusätzlich - einen Spindeltrieb aufweisen. Die Übertragungseinrichtung 4, 4a kann ein Magazin 15 zum Vorladen von Medientrenneinrichtungen M, M1 aufweisen.

Der Kolben 7 ist vorliegend relativ zu dem Gehäuse 6 der Übertragungseinrichtung 4, 4a zwischen einer ersten und einer zweiten Kolbenstellung S1, S2 entlang einer Stellrichtung R verstellbar. Dabei ist der Kolben 7 in der ersten Kolbenstellung S1 entlang der Stellrichtung R im Abstand zu dem an den Aufnahmeraum 5 angeschlossenen Anschluss K2 angeordnet. Der Kolben 7 ist in der zweiten Kolbenstellung S2 entlang der Stellrichtung R in dem Anschluss K2 derart aufgenommen, dass der Anschluss K2 fluiddicht mittels des Kolbens 7 von dem Aufnahmeraum 5 getrennt ist. Beispielsweise schließt der Kolben 7 in der zweiten Kolbenstellung S2 entlang der Stellrichtung R bündig mit einer Trennfläche T der Ventileinrichtung 1 ab. Ein bündiger Abschluss des Kolbens 7 mit der Trennfläche T kann fluiddurchlässig sein. In der Trennfläche T können der Basiskörper 2 und der Stellkörper 3 einander gleitbeweglich berühren. Die Trennfläche T kann als Trennebene ausgebildet sein.

Der Anschluss K2, an welchem vorliegend die Übertragungseinrichtung 4, 4a angeschlossen ist, kann eine innenseitige Einführfase aufweisen. Diese Einführfase kann einer Zentrierung des Kolbens 7 für seine Verstellung in die zweite Kolbenstellung S2 dienen. Die Einführfase kann zudem dazu dienen, die zu übertragende Medientrenneinrichtung M, M1 in dem Anschluss K2 zu zentrieren. Mittels der Einführfase kann ein Übermaß der Medientrenneinrichtung M1, M1 gegenüber dem zweiten Anschluss K2 ausgeglichen werden. Der Kolben 7 kann der Trennfläche T abgewandt einenends eine Dichtmanschette aufweisen, die innenseitig an dem Anschluss K2 anlegbar ist. Der Kolben 7 kann einen in Stellrichtung R abstehenden Stößel aufweisen, der in Stellrichtung R im Abstand zur Dichtmanschette endet. Zwischen dem Stößel und dem Anschluss K2 kann ein radialer fluiddurchlässiger Zwischenraum ausgebildet sein. Mittels des Stößels ist die Medientrenneinrichtung M, M1 verstellbar. Insofern kann eine Kraftübertragung zwischen Kolben 7 und Medientrenneinrichtung M, M1 in Stellrichtung R beabstandet zur Abdichtung des Anschlusses K2 mittels der Dichtmanschette erfolgen. Eine mittels der Dichtmanschette festgelegte Dichtebene kann somit örtlich von einer Stößelebene zur Kraftübertragung separiert sein, insbesondere entlang der Stellrichtung R. In der zweiten Kolbenstellung S2 kann die Stößelebene mit der Trennfläche T übereinstimmen. Eine umlaufende Dichtlippe der Dichtmanschette kann beim Beaufschlagen der Medientrenneinrichtung M, M1 mit Flüssigkeit F infolge des Flüssigkeitsdrucks radial nach außen gedrückt werden, um eine Dichtwirkung zu verstärken. Der Kolben 7 kann in eine Zwischenstellung zwischen der ersten und der zweiten Kolbenstellung S1, S2 positionierbar sein. Die Zwischenstellung kann mittels der Sensoreinrichtung 8 erkannt werden. Die Zwischenstellung kann so angeordnet sein, dass die Medientrenneinrichtung M, M1 in dem zweiten Anschluss K2 angeordnet ist und die Trennfläche T berührt, wenn sich der Kolben 7 in der Zwischenstellung befindet.

Der Basiskörper 2 weist beispielsweise einen in den zweiten Anschluss K2 mündenden und von Flüssigkeit durchfließbaren Fluidkanal KF auf. Der Fluidkanal KF kann mittels einer Pumpeinheit 104 der Baumaschine 100 mit Flüssigkeit versorgbar sein. Die Pumpeinheit 104 kann von der Dickstoff-Pumpeinheit 105 verschieden sein. Die Pumpeinheit 104 kann auf demselben Funktionsprinzip wie die Dickstoff-Pumpeinheit 105 basieren.

Die Ventileinrichtung 1 weist beispielsweise ein Flüssigkeitsventil auf. Mittels des Flüssigkeitsventils kann der Fluidkanal KF fluiddicht verschließbar sein, um den Fluidkanal KF von dem zweiten Anschluss K2 fluiddicht zu trennen. Das Flüssigkeitsventil kann an der Pumpeinheit 104 angeordnet sein. Die Ventileinrichtung 1 weist beispielsweise einen Flüssigkeitssammlerraum 11 auf. Der Flüssigkeitssammlerraum 11 kann mit einer Entlüftungseinrichtung 13 fluidleitend kommunizieren. Mittels der Entlüftungseinrichtung 13 kann der Fluidkanal KF entlüftet werden. Die Entlüftungseinrichtung 13 kann entlang der Schwerkraftrichtung an einem am höchsten gelegenen Ort des Fluidkanals KF angeordnet sein. Der Flüssigkeitssammlerraum 11 kann zudem mit einer Ablasseinrichtung 14 fluidleitend kommunizieren. Über die Ablasseinrichtung 14 kann der Fluidkanal KF entleert werden. Die Entlüftungseinrichtung 13 kann manuell betätigbar sein. Alternativ oder zusätzlich kann die Entlüftungseinrichtung 13 automatisch betätigbar sein. Die Entlüftungseinrichtung 13 kann kontrollierbar, d.h. steuerbar und/oder regelbar, ausgebildet sein. Die Entlüftungseinrichtung 13 kann einen Schwimmer aufweisen, mittels welchem die Entlüftungseinrichtung 13 selbsttätig in Abhängigkeit von einem Füllstand an Flüssigkeit F in dem Flüssigkeitssammlerraum 11 betätigt werden kann. Die Entlüftungseinrichtung 13 kann einen Kugelhahn und/oder ein elektrisch kontrollierbares Ventil aufweisen. Gleiches kann für die Ablasseinrichtung 14 gelten.

Ein erfindungsgemäßes Verfahren dient zum Reinigen der Baumaschine 100. Beispielsweise ist die Baumaschine 100 mittels des Verfahrens automatisch reinigbar. Das Verfahren weist einen Schritt a) auf. Gemäß dem Schritt a) erfolgt ein Verstellen des Stellkörpers 3 von seiner ersten Schaltstellung P1 in seine zweite Schaltstellung P2 relativ zum Basiskörper 2. Das Verfahren weist zudem einen Schritt b) auf, der zeitlich nach Durchführung des Schritts a) durchgeführt wird. Gemäß dem Schritt b) erfolgt ein Übertragen einer Medientrenneinrichtung M, M1 von der Übertragungseinrichtung 4, 4a in den dritten Anschluss K3, so dass die Medientrenneinrichtung M, M1 an oder in der Dickstoff-Förderleitung 103 angeordnet wird. Das Verfahren weist außerdem einen Schritt c) auf, der zeitlich nach dem Schritt b) durchgeführt wird. Gemäß dem Schritt c) erfolgt ein Erzeugen eines über die Medientrenneinrichtung M, M1 abfallenden Druckgefälles. Dabei wird das Druckgefälle erzeugt, um die Medientrenneinrichtung M, M1 unter Verdrängung von in dem dritten Anschluss K3 und/oder in der Dickstoff-Förderleitung 103 befindlichem Dickstoff D relativ zur Ventileinrichtung 1 durch die Dickstoff-Förderleitung 103 hindurch entlang des Druckgefälles zu verstellen. Auf diese Weise kann der in dem dritten Anschluss K3 sowie - alternativ oder zusätzlich - in der Dickstoff-Förderleitung 3 befindliche Dickstoff D nach außen geschoben werden, um den Dickstoff D aus dem dritten Anschluss K3 bzw. der Dickstoff-Förderleitung 103 zu entfernen.

Zeitlich vor Durchführung des Schritts a) kann die Medientrenneinrichtung M, M1 aus der Übertragungseinrichtung 4, 4a in den zweiten Anschluss K2 verstellt werden, um den zweiten Anschluss K2 mittels der Medientrenneinrichtung M, M1 fluiddicht zu verschließen. Insbesondere wird die Medientrenneinrichtung M, M1 dabei bis an die Trennfläche T verstellt. Wenn die Medientrenneinrichtung M, M1 die Trennfläche T berührt, kann der zweite Anschluss K2 der Trennfläche T gegenüberliegend fluiddicht verschlossen sein.

Beispielsweise weist der Schritt b) zusätzlich ein Übertragen einer weiteren Medientrenneinrichtung M, M2 von einer weiteren Übertragungseinrichtung 4, 4b in den ersten Anschluss K1 auf. Dabei wird die weitere Medientrenneinrichtung M, M2 derart übertragen, dass die weitere Medientrenneinrichtung M, M2 an oder in der Pumpseite 101, beispielsweise an oder in der pumpseitigen Dickstoff-Pumpleitung 102, angeordnet wird. Der Schritt c) umfasst beispielsweise zusätzlich ein Erzeugen eines über die weitere Medientrenneinrichtung M, M2 abfallenden Druckgefälles. Dabei wird das über die weitere Medientrenneinrichtung M, M2 abfallende Druckgefälle erzeugt, um die weitere Medientrenneinrichtung M, M2 unter Verdrängung von in dem ersten Anschluss K1 sowie - alternativ oder zusätzlich - pumpseitig vorhandenem Dickstoff D relativ zur Ventileinrichtung 1 pumpseitig entlang des Druckgefälles zu verstellen.

Bei Durchführung des Schritts c) wird zum Erzeugen des Druckgefälles beispielsweise pumpseitig vorhandener Dickstoff D abgesaugt. Das Absaugen des pumpseitig vorhandenen Dickstoffs D kann beispielsweise mittels der Dickstoff-Pumpeinheit 105 der Baumaschine 100 erfolgen. Dabei wird der pumpseitig vorhandene Dickstoff D derart abgesaugt, dass die weitere Medientrenneinrichtung M, M2 pumpseitig durch das Absaugen von der Ventileinrichtung 1 weg verstellt wird. Wenn der Dickstoff D, insbesondere im Wesentlichen vollständig, pumpseitig abgesaugt worden ist, werden bei Durchführung des Schritts c) die Pumpseite 101 und die pumpseitig angeordnete weitere Medientrenneinrichtung M, M2 mit einer Flüssigkeit F beaufschlagt. Das Beaufschlagen der weiteren Medientrenneinrichtung M, M2 kann mittels der Dickstoff-Pumpeinheit 105 erfolgen. Die Flüssigkeit F kann in Form von Frisch- oder Brauchwasser vorliegen. Das Beaufschlagen der zweiten Medientrenneinrichtung M, M2 erfolgt dabei derart, dass die weitere Medientrenneinrichtung M, M2 pumpseitig zu der Ventileinrichtung 1 hin zurückverstellt und anschließend über die Ventileinrichtung 1 in die weitere Übertragungseinrichtung 4, 4b befördert wird. Die weitere Übertragungseinrichtung 4, 4b kann dabei als Fangkorb fungieren, in welchem die weitere Medientrenneinrichtung M, M2 aufgefangen wird.

Beispielsweise erfolgt bei Durchführung des Schritts c) zeitlich vor dem Verstellen der an der Dickstoff-Förderleitung 103 angeordneten Medientrenneinrichtung M, M1 ein Verstellen des Stellkörpers 3 von seiner zweiten Schaltstellung P2 in seine erste Schaltstellung P1 relativ zum Basiskörper 2. Dabei wird die Dickstoff-Förderleitung 103 über die Pumpseite 102 und die Ventileinrichtung 1 mit Flüssigkeit F beaufschlagt, um die an der Dickstoff-Förderleitung 103 angeordnete Medientrenneinrichtung M, M1 durch die Dickstoff-Förderleitung 103 hindurch zu verstellen.

Bei Durchführung des Schritts b) wird beispielsweise der zweite Anschluss K2 der Ventileinrichtung 1 von dem Aufnahmeraum 5 der an dem zweiten Anschluss K2 angeschlossenen Übertragungseinrichtung 4, 4a fluiddicht getrennt. Dieses fluiddichte Trennen kann mittels des Kolbens 7 der Übertragungseinrichtung 4, 4a erfolgen. Bei Durchführung des Schritts b) wird zudem der zweite Anschluss K2 mittels des Flüssigkeitsventils der Ventileinrichtung 1 fluidleitend mit der Flüssigkeitsleitung 106 der Baumaschine 100 verbunden. Insbesondere wird die Flüssigkeitsleitung 106 über den Fluidkanal KF mit dem zweiten Anschluss K2 verbunden.

Der Fluidkanal KF kann zwischen der Übertragungseinrichtung 4, 4a und der Trennfläche T, insbesondere unter einem spitzen Winkel, in den zweiten Anschluss K2 münden. Dabei kann die Flüssigkeitsleitung 106 von der Flüssigkeits-Pumpeinheit 104 der Baumaschine 100 mit Flüssigkeit F gespeist werden. Bei Durchführung des Schritts c) werden die Dickstoff-Förderleitung 103 und die darin angeordnete Medientrenneinrichtung M, M1 beispielsweise über die Flüssigkeitsleitung 106 mit Flüssigkeit F beaufschlagt, um das über die Medientrenneinrichtung M, M1 abfallende Druckgefälle zu erzeugen.

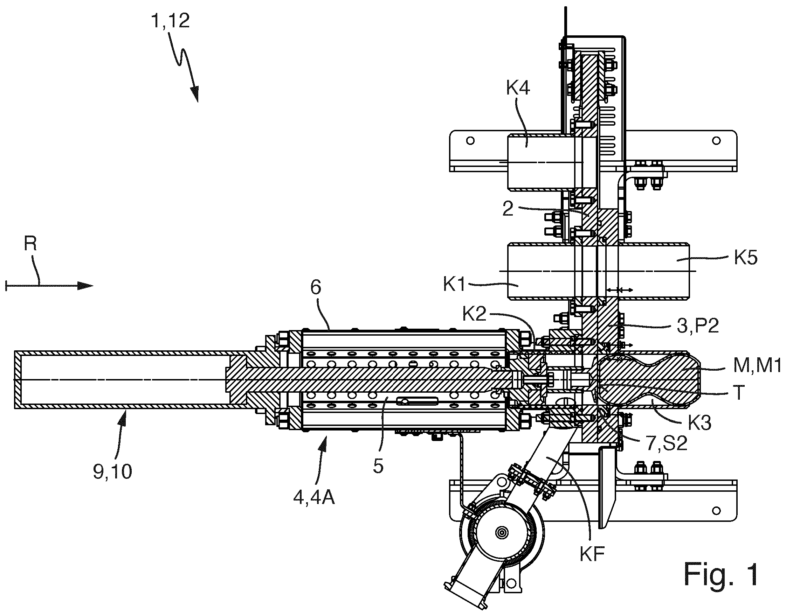

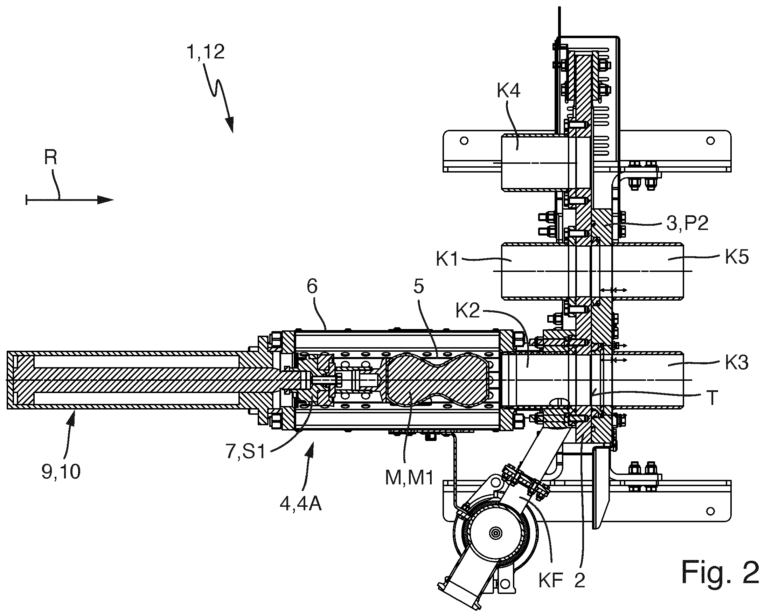

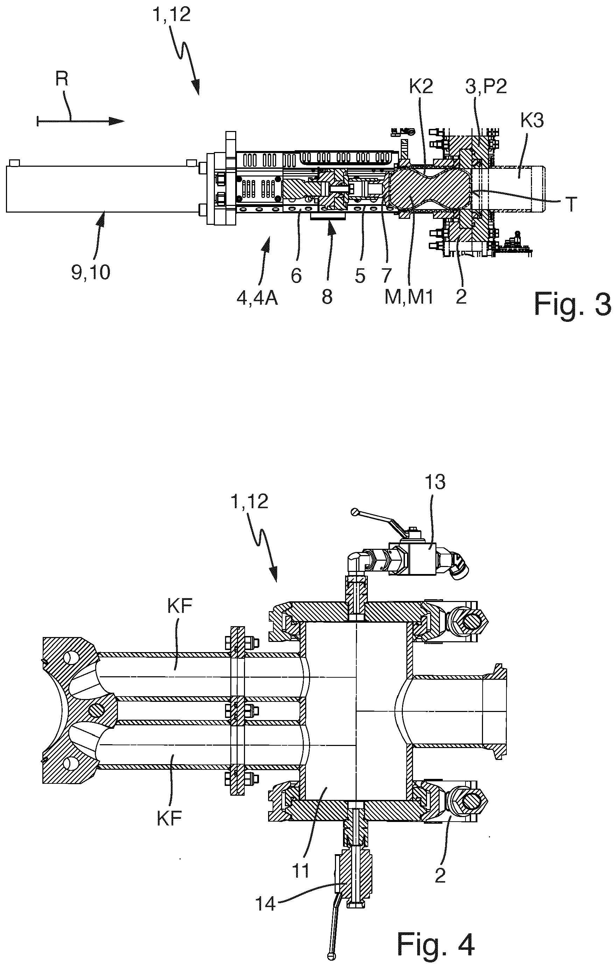

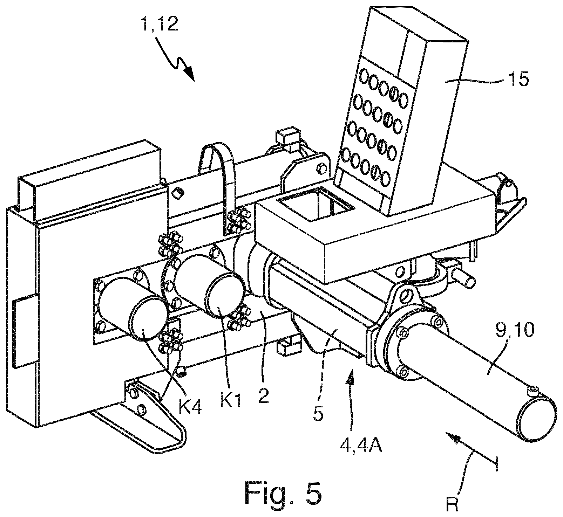

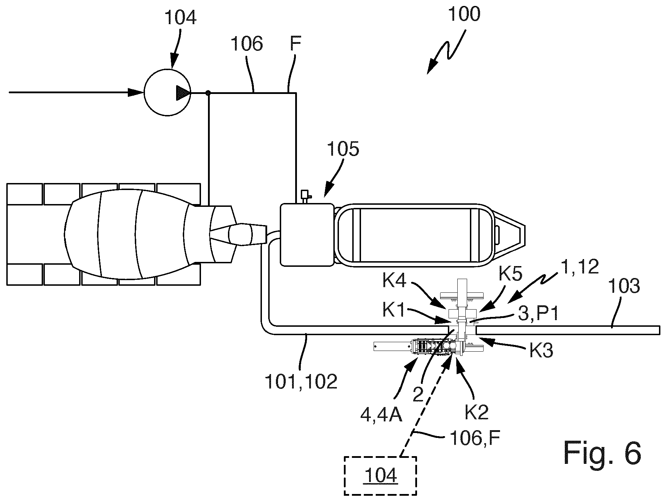

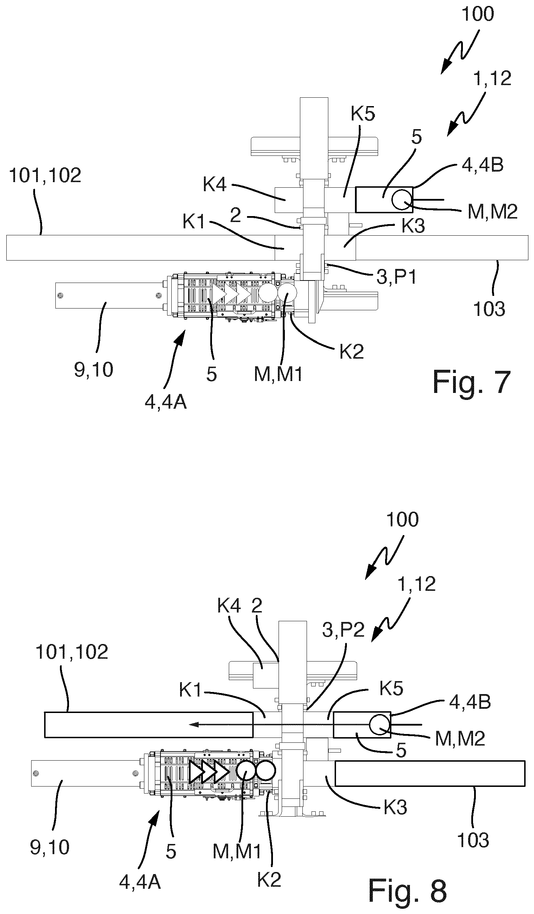

Bei den Ausführungsformen nach den Fig. 1 bis 10 weist der Basiskörper 2 den ersten Anschluss K1, den zweiten Anschluss K2 und den vierten Anschluss K4 auf. Der Stellkörper 3 weist dabei den dritten Anschluss K3 und den fünften Anschluss K5 auf. Am zweiten Anschluss K2 ist die Medientrenneinrichtung 4, 4a angeschlossen. Am ersten Anschluss K1 ist die Pumpseite 101 angeschlossen. Der vierte Anschluss K4 ist ungenutzt. Am fünften Anschluss K5 kann die weitere Übertragungseinrichtung 4, 4b angeschlossen sein. Am dritten Anschluss K3 ist die Dickstoff-Förderleitung 103 angeschlossen. Die Flüssigkeitsleitung 106 kann beispielsweise über den Fluidkanal KF seitlich, insbesondere unter einem spitzen Winkel, in den zweiten Anschluss K2 münden. Ausgehend von der Darstellung nach Fig. 6 kann das erfindungsgemäße Verfahren durchgeführt werden, was in den Fig. 7 bis 10 in der Art von Momentaufnahmen illustriert ist. In der Darstellung nach Fig. 6 befindet sich die Baumaschine 100 beispielsweise in einem Förderbetrieb, in welchem Dickstoff D mittels der Baumaschine 100 von der Dickstoff-Pumpeinheit 105 ausgehend in Richtung der Dickstoff-Förderleitung 103 förderbar ist. Im Dickstoff-Förderbetrieb befindet sich der Stellkörper 3 in seiner ersten Schaltstellung P1. In der ersten Schaltstellung P1 ist die Pumpseite 101 mittels des ersten Anschlusses K1 und des dritten Anschlusses K3 mit der Dickstoff-Förderleitung 3 verbunden. Der vorliegend ungenutzte Anschluss K4 kann in der ersten Schaltstellung P1 mit dem fünften Anschluss K5 verbunden sein. Der zweite Anschluss K2 kann der Übertragungseinrichtung 4, 4a gegenüberliegend freiliegen. Die in der ersten Schaltstellung P1 miteinander verbundenen Anschlüsse K1, K3 sind von den übrigen Anschlüssen K2, K4, K5 fluiddicht getrennt. Die in der ersten Schaltstellung P1 miteinander verbundenen Anschlüsse K4, K5 sind in der ersten Schaltstellung P1 von den übrigen Anschlüssen K1, K2, K3 fluiddicht getrennt. Der Anschluss K2 ist in der ersten Schaltstellung P1 von den übrigen Anschlüssen K1, K3, K4, K5 fluiddicht getrennt. "Fluiddicht getrennt" bedeutet dabei, dass keine direkte Fluidverbindung zwischen den getrennten Anschlüssen vorhanden ist. Fluiddicht voneinander getrennte Anschlüsse können über eine äußere Umgebung miteinander kommunizieren, aber nicht direkt. Fig. 7 zeigt vergrößert den gleichen Zustand der Baumaschine 100 wie in Fig. 6 gezeigt. Dabei ist gemäß Fig. 7 am fünften Anschluss K5 die weitere Übertragungseinrichtung 4, 4b angeschlossen.

Ausgehend von dem in den Fig. 6 und 7 gezeigten Zustand wird bei Durchführung des Schritts a) des Verfahrens der Stellkörper 3 von seiner ersten Schaltstellung P1 in seine zweite Schaltstellung P2 relativ zum Basiskörper 2 verstellt, um den in Fig. 8 gezeigten Zustand einzunehmen. Es folgt die Durchführung des Schritts b). Dabei wird, solange sich der Stellkörper 3 in seiner zweiten Position P2 befindet, die weitere Medientrenneinrichtung M, M2 von der weiteren Übertragungseinrichtung 4, 4b über den fünften Anschluss K5 und den ersten Anschluss K1 in die pumpseitige Dickstoff-Pumpleitung 102 verstellt. Dieses Verstellen in Richtung der Dickstoff-Pumpeinheit 105 kann durch Ansaugen mittels der Dickstoff-Pumpeinheit 105 erfolgen.

Sobald die weitere Medientrenneinrichtung M, M2 zur Dickstoff-Pumpeinheit 105 hin verstellt wurde, kann eine Pumprichtung der Dickstoff-Pumpeinheit 105 umgekehrt werden. Infolge eines derartigen Umkehrens der Pumprichtung kann dann die weitere Medientrenneinrichtung M, M2 zur Ventileinrichtung 1 hin zurückverstellt werden.

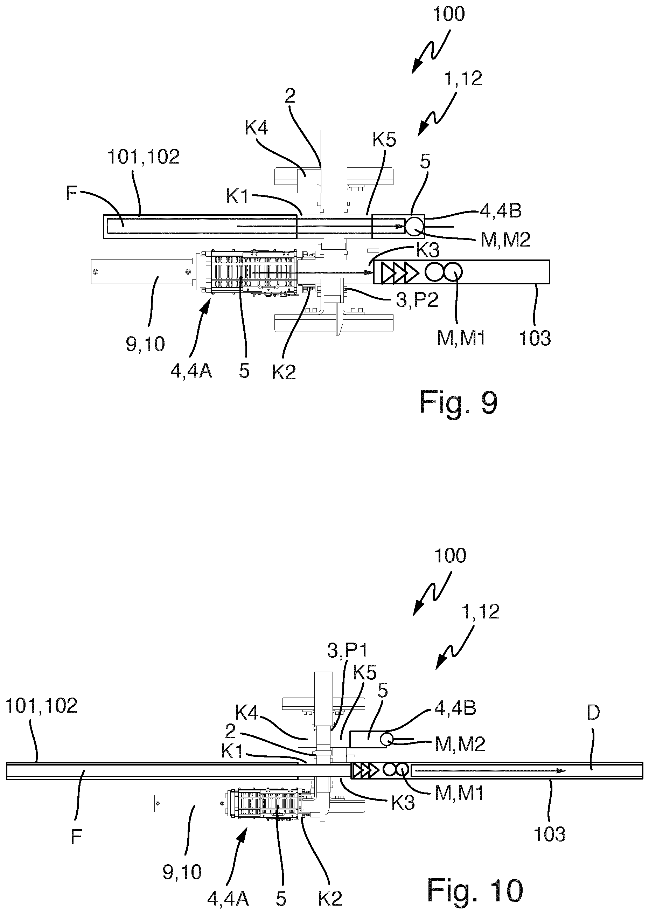

Wie in Fig. 9 erkennbar, wird die weitere Medientrenneinrichtung M, M2 mittels von der Dickstoff-Pumpeinheit 105 geförderter Flüssigkeit F durch den ersten Anschluss K1 und den fünften Anschluss K5 hindurch zur weiteren Übertragungseinrichtung 4, 4b verstellt. Anschließend kann die weitere Medientrenneinrichtung M, M2 in dem Aufnahmeraum 5 der weiteren Übertragungseinrichtung 4, 4b aufgefangen werden. Gleichzeitig wird bei Durchführung des Schritts b), solange sich der Stellkörper 3 in seiner zweiten Position P2 befindet, die Medientrenneinrichtung M, M1 mittels der Übertragungseinrichtung 4, 4a über den zweiten Anschluss K2 und den dritten Anschluss K3 in die Dickstoff-Förderleitung 103 eingebracht. Nun wird der Stellkörper 3 relativ zum Basiskörper 2 in seine erste Schaltstellung P1 verstellt, um den in Fig. 10 dargestellten Zustand zu erreichen. Eine infolge der Verstellung der weiteren Medientrenneinrichtung M, M2 bereits in der Dickstoff-Pumpleitung 102 vorhandene Flüssigkeitssäule an Flüssigkeit F kann somit mit der Medientrenneinrichtung M, M1 in Kontakt gebracht werden. Auf diese Weise wird die Medientrenneinrichtung M, M1 vorliegend mit der Flüssigkeit F beaufschlagt. Der Flüssigkeitssäule gegenüberliegend kann die Medientrenneinrichtung M, M1 mit in der Dickstoff-Förderleitung 103 vorhandenem Dickstoff D in Kontakt stehen. Mittels der Dickstoff-Pumpeinheit 105 wird nun ein Überdruck in der Flüssigkeitssäule an Flüssigkeit F erzeugt, um das Druckgefälle zum Verstellen der Medientrenneinrichtung M, M2 bereitzustellen. Hierdurch wird die Medientrenneinrichtung M, M1 entlang der Dickstoff-Förderleitung 103 verstellt, um den Dickstoff D aus der Förderleitung 103 zu verdrängen. In der zweiten Schaltstellung P2 ist bei den Ausführungsformen nach den Fig. 1 bis 10 der zweite Anschluss K2 mit dem dritten Anschluss K3 verbunden. Der erste Anschluss ist in der zweiten Schaltstellung P2 mit dem fünften Anschluss K5 verbunden. Der ungenutzte vierte Anschluss K4 liegt in der zweiten Schaltstellung P2 frei. Die miteinander verbundenen Anschlüsse K2, K3 sind in der zweiten Schaltstellung P2 von den übrigen Anschlüssen K1, K4, K5 fluiddicht getrennt. Die miteinander verbundenen Anschlüsse K1, K5 sind in der zweiten Schaltstellung P2 von den übrigen Anschlüssen K2, K3, K4 fluiddicht getrennt. Der ungenutzte Anschluss K4 ist in der zweiten Schaltstellung P2 mit keinem der Anschlüsse K1, K2, K3, K5 verbunden. Nachdem der Dickstoff D aus der Förderleitung 103 mittels der Medientrenneinrichtung M, M1 verdrängt wurde, kann die Medientrenneinrichtung M, M1 mittels der Dickstoff-Pumpeinheit 105 unter Umkehr der Pumprichtung zur Ventileinrichtung 101 zurückgesogen werden.

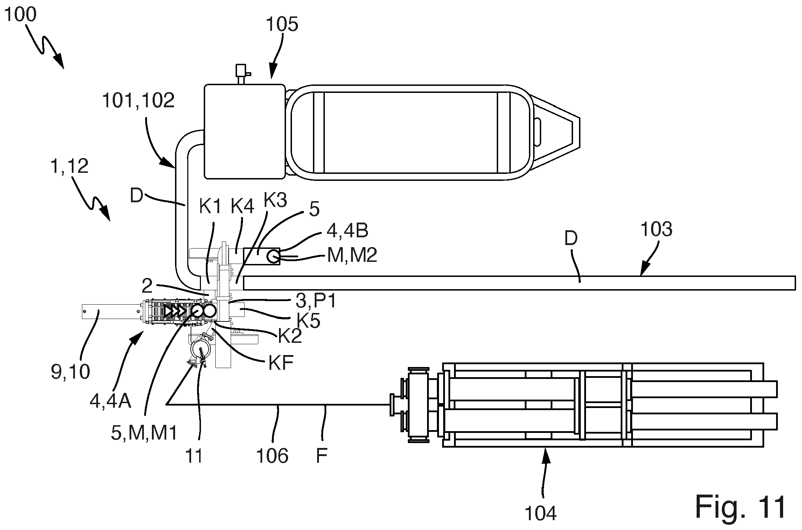

Bei der Ausführungsform nach den Fig. 11 bis 14 weist der Basiskörper 2 den ersten Anschluss K1 sowie den zweiten Anschluss K2 auf. Der Stellkörper 3 weist den dritten Anschluss K3, den vierten Anschluss K4 und den fünften Anschluss K5 auf. An den zweiten Anschluss K2 ist die Übertragungseinrichtung 4, 4a angeschlossen. An den vierten Anschluss K4 ist die weitere Übertragungseinrichtung 4, 4b angeschlossen. In den zweiten Anschluss K2 mündet unter einem spitzen Winkel der Fluidkanal KF, der von Flüssigkeit F durchströmbar ist. Die Flüssigkeit F kann mittels der Pumpeinheit 104 durch die Flüssigkeitsleitung 106 in den Fluidkanal KF gefördert werden. Gemäß Fig. 11 befindet sich der Stellkörper 3 in seiner ersten Schaltstellung P1. In der ersten Schaltstellung P1 kann sich die Baumaschine 100 in einem Förderbetrieb befinden, in welchem mittels der Dickstoff-Pumpeinheit 105 durch die pumpseitige Förderleitung 102, den ersten Anschluss K1, den dritten Anschluss K3 und die Dickstoff-Förderleitung 103 Dickstoff gefördert werden kann.

An einer der Dickstoff-Pumpeinheit 105 gegenüberliegenden Dickstoff-Förderleitung 103 kann ein Distributionssystem der Baumaschine 100 angeordnet sein. Mittels des Distributionssystems kann der geförderte Dickstoff D in eine geschalte Gussform befördert werden.

Bei der Ausführungsform nach den Fig. 11 bis 14 ist in der ersten Schaltstellung P1 der zweite Anschluss K2 mit dem fünften Anschluss K5 verbunden. Der erste Anschluss K1 ist in der ersten Schaltstellung P1 mit dem dritten Anschluss K3 verbunden. Der vierte Anschluss K4 liegt in der ersten Schaltstellung P1 frei. Dabei sind die in der ersten Schaltstellung P1 miteinander verbundenen Anschlüsse K2, K5 von den übrigen Anschlüssen K1, K3, K4 fluiddicht getrennt. Die in der ersten Schaltstellung P1 miteinander verbundenen Anschlüsse K1, K3 sind von den übrigen Anschlüssen K2, K5, K4 fluiddicht getrennt. Der freiliegende Anschluss K4 ist in der ersten Schaltstellung P1 von den übrigen Anschlüssen K1, K2, K3, K5 getrennt.

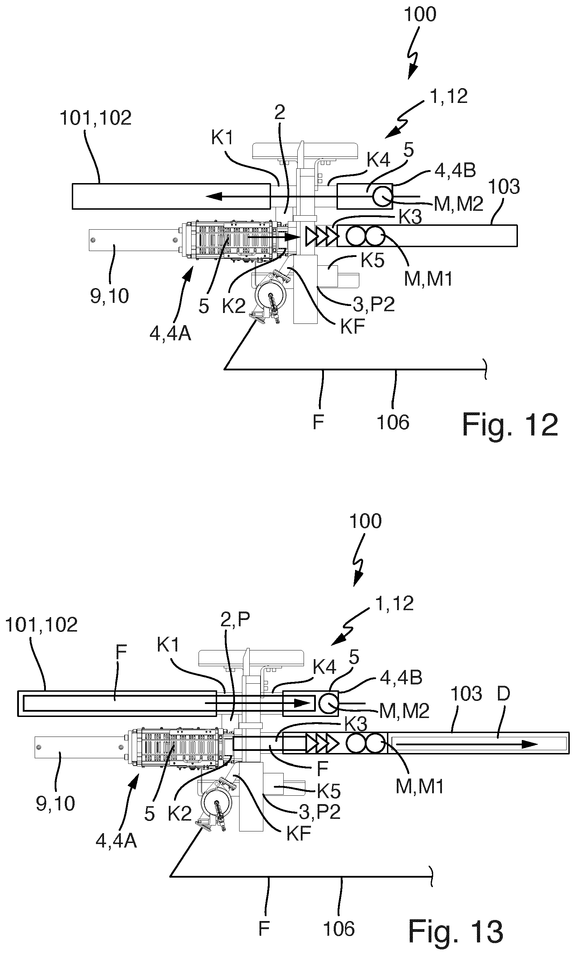

Ausgehend von dem in Fig. 11 gezeigten Zustand wird bei Durchführung des Schritts a) des Verfahrens der Stellkörper 3 in seine zweite Schaltstellung P2 verstellt, um den in Fig. 12 gezeigten Zustand zu erreichen. Anschließend wird der Schritt b) durchgeführt. Entsprechend wird die Medientrenneinrichtung M, M1 von der Übertragungseinrichtung 4, 4a über den zweiten Anschluss K2 und über den dritten Anschluss K3 in die Dickstoff-Förderleitung 103 eingebracht. Zeitgleich kann die weitere Medientrenneinrichtung M, M2 von der weiteren Übertragungseinrichtung 4, 4b über den vierten Anschluss K4 und den ersten Anschluss K1 in die pumpseitige Dickstoff-Pumpleitung 102 eingebracht werden. In der zweiten Schaltstellung P2 sind der zweite Anschluss K2 und der dritte Anschluss K3 miteinander verbunden. In der zweiten Schaltstellung P2 sind zudem der erste Anschluss K1 und der vierte Anschluss K4 miteinander verbunden. Der fünfte Anschluss K5 ist in der zweiten Schaltstellung P2 ungenutzt. Die in der zweiten Schaltstellung P2 miteinander verbundenen Anschlüsse K1, K4 sind von den übrigen Anschlüssen K2, K3, K5 getrennt. Die in der zweiten Schaltstellung P2 miteinander verbundenen Anschlüsse K2, K3 sind von den übrigen Anschlüssen K1, K4, K5 getrennt. Der in der zweiten Schaltstellung ungenutzte Anschluss K5 ist von den übrigen Anschlüssen K1, K2, K3, K4 getrennt. Nachdem die weitere Medientrenneinrichtung M, M2 über den vierten Anschluss K4 und den ersten Anschluss K1 zur Pumpseite 101 übertragen wurde, wird die Medientrenneinrichtung M, M2 durch Ansaugen mittels der Dickstoff-Pumpeinheit 105 zur Dickstoff-Pumpeinheit 105 hin verstellt. Dabei wird in der pumpseitigen Dickstoff-Pumpleitung 102 vorhandener Dickstoff D in Richtung der Dickstoff-Pumpeinheit 105 verdrängt.

An der Dickstoff-Pumpeinheit 105 kann der mittels der weiteren Medientrenneinrichtung M, M2 verdrängte Dickstoff D abgelassen werden, insbesondere mittels einer Ablasseinrichtung der Dickstoff-Pumpeinheit 105. Die Ablasseinrichtung kann den Vorratsraum der Dickstoff-Pumpeinheit 105 automatisch nach unten freigeben oder verschließen.

Anschließend an das in Fig. 12 gezeigte Ansaugen der weiteren Medientrenneinrichtung M, M2 kann mittels der Dickstoff-Pumpeinheit 105 die weitere Medientrenneinrichtung M, M2 mit Flüssigkeit F beaufschlagt werden. Durch dieses Beaufschlagen der weiteren Medientrenneinrichtung M, M2 wird die weitere Medientrenneinrichtung M, M2 von der Dickstoff-Pumpeinheit 105 ausgehend wieder in Richtung der Ventileinrichtung durch die pumpseitige Dickstoff-Pumpleitung 102 zurückverstellt. Im Anschluss an dieses Zurückverstellen kann die weitere Medientrenneinrichtung M, M2 in der weiteren Übertragungseinrichtung 4, 4b aufgefangen werden, wie dies in Fig. 13 gezeigt ist. Nachdem die weitere Medientrenneinrichtung M, M2 aufgefangen wurde, kann die pumpseitige Dickstoff-Pumpleitung 102 mit Flüssigkeit F gespült werden, die mittels der Dickstoff-Pumpeinheit 105 durch die Dickstoff-Pumpleitung 102 gefördert wird.

Gleichzeitig mit dem Verstellen der weiteren Medientrenneinrichtung M, M2 kann - solange sich der Stellkörper 3 noch in seiner zweiten Schaltstellung P2 befindet - die an der Dickstoff-Förderleitung 103 angeordnete Medientrenneinrichtung M, M1 über den Fluidkanal 102 mit Flüssigkeit F beaufschlagt werden, wie in Fig. 13 ebenfalls erkennbar. Das Beaufschlagen der Medientrenneinrichtung M, M1 mit Flüssigkeit über den Fluidkanal 106 kann während des Verstellens der weiteren Medientrenneinrichtung 4, 4b in Richtung der Dickstoff-Pumpeinheit 105 und/oder zeitgleich mit dem Zurückverstellen der weiteren Medientrenneinrichtung M, M2 von der Dickstoff-Pumpeinheit 105 in Richtung der Ventileinrichtung 1 erfolgen. Durch das Beaufschlagen der Medientrenneinrichtung M, M1 mit Flüssigkeit über den Fluidkanal 106 wird die Medientrenneinrichtung M, M1 unter Verdrängung von in der Dickstoff-Förderleitung 103 vorhandenem Dickstoff D von der Ventileinrichtung 1 weg verstellt.

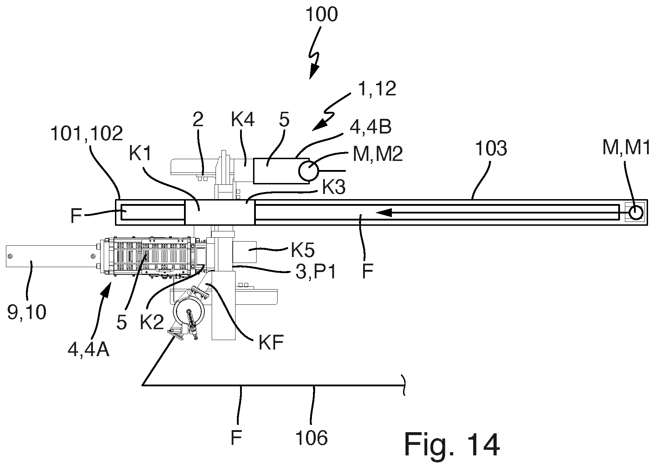

Sobald der Dickstoff D, insbesondere vollständig, aus der Dickstoff-Förderleitung 103 verdrängt wurde, kann der Stellkörper 3 in seine erste Schaltstellung P1 zurückverstellt werden, um den in Fig. 14 gezeigten Zustand zu erreichen. Eine in der Dickstoff-Förderleitung 103 vorhandene Flüssigkeitssäule kann infolge des Verstellens des Stellkörpers 3 in seine erste Position P1 mit einer in der pumpseitigen Dickstoff-Pumpleitung 102 vorhandenen Flüssigkeitssäule verbunden werden. Daraufhin kann die aus der Verbindung resultierende Flüssigkeitssäule mittels der Dickstoff-Pumpeinheit 105 abgesaugt werden, um die weitere Medientrenneinrichtung M, M1 in Richtung der Dickstoff-Pumpeinheit 105 zu verstellen. Auf diese Weise lässt es sich vermeiden, dass die weitere Medientrenneinrichtung M, M1 in die geschalte Gussform gelangt, die im Förderbetrieb der Baumaschine 100 mit Dickstoff D befüllbar ist.

## Patentansprüche

1. Ventileinrichtung (1), insbesondere Molchlader (12), zum Anfügen an eine Dickstoff-Förderleitung (103) einer Baumaschine (100) zum Fördern von Dickstoff (D), wobei die Ventileinrichtung (1) aufweist:
- einen Basiskörper (2) und einen relativ zum Basiskörper (2) zwischen einer ersten Schaltstellung (P1) und einer zweiten Schaltstellung (P2) verstellbaren, insbesondere schieberartigen, Stellkörper (3), und
- eine automatische, insbesondere aktive, Übertragungseinrichtung (4, 4A) mit einem Aufnahmeraum (5) zum Aufnehmen einer Medientrenneinrichtung (M, M1), insbesondere eines Molchs,
- wobei der Basiskörper (2) einen ersten Anschluss (K1) zum Anschließen an eine Pumpseite (101) der Baumaschine (100), insbesondere an eine von Dickstoff (D) durchfließbare pumpseitige Dickstoff-Pumpleitung (102) der Baumaschine (100), und einen zweiten Anschluss (K2) aufweist,
- wobei der Stellkörper (3) einen dritten Anschluss (K3) zum Anschließen der Dickstoff-Förderleitung (103) der Baumaschine (100) aufweist,
- wobei der zweite Anschluss (K2) und der Aufnahmeraum (5) aneinander angeschlossen sind,
- wobei in der ersten Schaltstellung (P1) der erste Anschluss (K1) und der dritte Anschluss (K3) für einen Fluss mindestens von Dickstoff (D) zwischen dem ersten Anschluss (K1) und dem dritten Anschluss (K3) miteinander verbunden sind,
- wobei in der zweiten Schaltstellung (P2) der zweite Anschluss (K2) und der dritte Anschluss (K3) für eine automatische Übertragung der Medientrenneinrichtung (M, M1) zwischen dem dritten Anschluss (K3) und der Übertragungseinrichtung (4, 4A), insbesondere über den zweiten Anschluss (K2), miteinander verbunden sind,
**dadurch gekennzeichnet, dass**
- die Übertragungseinrichtung (4, 4A, 4B) einen Kolben (7) aufweist, der in dem Aufnahmeraum (5) relativ zu einem Gehäuse (6) der Übertragungseinrichtung (4, 4A, 4B) derart verstellbar geführt ist, dass, insbesondere in der zweiten Schaltstellung (P2), die Medientrenneinrichtung (M, M1, M2) durch Verstellen des Kolbens (7) relativ zu dem Gehäuse (6) aus dem Aufnahmeraum (5) heraus übertragbar ist, dass
- der Kolben (7) relativ zu einem Gehäuse (6) der Übertragungseinrichtung (4, 4A, 4B) zwischen einer ersten und einer zweiten Kolbenstellung (S1, S2) entlang einer Stellrichtung (R) verstellbar ist, dass
- der Kolben (7) in der ersten Kolbenstellung (S1) entlang der Stellrichtung (R) im Abstand zu dem an den Aufnahmeraum (5) angeschlossenen Anschluss (K2, K4, K5) angeordnet ist, und dass
- der Kolben (7) in der zweiten Kolbenstellung (S2) entlang der Stellrichtung (R) in dem jeweiligen Anschluss (K2, K4, K5) derart aufgenommen ist, dass dieser Anschluss (K2, K4, K5) fluiddicht mittels des Kolbens (7) von dem Aufnahmeraum (5) getrennt ist.

2. Ventileinrichtung (1) nach dem vorhergehenden Anspruch,
- wobei der Basiskörper (2) einen, insbesondere ungenutzten, vierten Anschluss (K4) aufweist, oder
- wobei der Stellkörper (3) einen vierten Anschluss (K4) aufweist, wobei der vierte Anschluss (K4) in der zweiten Schaltstellung (P2) mit dem ersten Anschluss (K1) und in der ersten Schaltstellung (P1) dem Basiskörper (2) zugewandt mit einer äußeren Umgebung der Ventileinrichtung (1) verbunden ist.

3. Ventileinrichtung (1) nach einem der vorhergehenden Ansprüche,
- wobei der Stellkörper (3) einen fünften Anschluss (K5) aufweist,
- wobei der fünfte Anschluss (K5) in der ersten Schaltstellung (P1) mit dem zweiten Anschluss (K2) verbunden ist, oder wobei der fünfte Anschluss (K5) in der ersten Schaltstellung (P1) mit einem vierten Anschluss (K4) des Basiskörpers (2) und in der zweiten Schaltstellung (P2) mit dem ersten Anschluss (K1) verbunden ist.

4. Ventileinrichtung (1) nach einem der beiden vorhergehenden Ansprüche,
- wobei die Ventileinrichtung (1) eine weitere, insbesondere passive, Übertragungseinrichtung (4, 4B) mit einem weiteren Aufnahmeraum (5) zum Aufnehmen einer weiteren Medientrenneinrichtung (M, M2), insbesondere eines Molchs, aufweist,
- wobei der vierte Anschluss (K4) oder der fünfte Anschluss (K5) an den weiteren Aufnahmeraum (5) angeschlossen ist, so dass die weitere Medientrenneinrichtung (M, M2) zwischen dem weiteren Aufnahmeraum (5) und dem vierten Anschluss (K4) oder dem fünften Anschluss (K5) zur Pumpseite (101) hin übertragbar ist.

5. Ventileinrichtung (1) nach eine einem der vorhergehenden Ansprüche,
wobei die Übertragungseinrichtung (4, 4A, 4B) ein Gehäuse (6) aufweist, wobei das Gehäuse (6) den Aufnahmeraum (5) der Übertragungseinrichtung (4, 4A, 4B), insbesondere flüssigkeits- und/oder dickstoffdurchlässig, begrenzt.

6. Ventileinrichtung (1) nach einem der vorhergehenden Ansprüche,
- wobei die Übertragungseinrichtung (4, 4A, 4B) eine Sensoreinrichtung (8) zur Detektion wenigstens einer Kolbenstellung des Kolbens (7) relativ zu dem Gehäuse (6) aufweist, und/oder
- wobei die Übertragungseinrichtung (4, 4A, 4B) eine Antriebseinrichtung (9) aufweist, wobei die Antriebseinrichtung (9) zum automatischen Verstellen des Kolbens (7) relativ zu dem Gehäuse (6) ausgebildet ist, insbesondere wobei die Antriebseinrichtung (9) einen Hydraulikzylinder (10) und/oder einen Spindeltrieb aufweist.

7. Ventileinrichtung (1) nach dem vorhergehenden Anspruch,
- wobei der Kolben (7) in der zweiten Kolbenstellung (S2) entlang der Stellrichtung (R) bündig mit einer Trennfläche (T) der Ventileinrichtung (1) abschließt, wobei der Basiskörper (2) und der Stellkörper (3) einander gleitbeweglich in der Trennfläche (T) berühren.

8. Ventileinrichtung (1) nach einem der vorhergehenden Ansprüche,
- wobei der Basiskörper (2) einen in den zweiten Anschluss (K2) mündenden und von Flüssigkeit (F) durchfließbaren Fluidkanal (KF) aufweist, insbesondere wobei der Fluidkanal (KF) mittels einer Pumpeinheit (104) der Baumaschine (100) mit Flüssigkeit (F) versorgbar ist,
- insbesondere wobei die Ventileinrichtung (1) ein Flüssigkeitsventil aufweist, wobei der Fluidkanal (KF) mittels des Flüssigkeitsventils fluiddicht verschließbar ist, um den Fluidkanal (KF) von dem zweiten Anschluss (K2) fluiddicht zu trennen.

9. Ventileinrichtung (1) nach einem der vorhergehenden Ansprüche,
wobei die Übertragungseinrichtung (4, 4A, 4B) ein Magazin (15) zum Vorladen von Medientrenneinrichtungen (M, M1, M2) aufweist.

10. Baumaschine (100) zum Fördern von Dickstoff (D), wobei die Baumaschine (100) aufweist,
- eine von Dickstoff (D) durchfließbare Dickstoff-Förderleitung (103),
- eine Pumpseite (101), an welcher insbesondere eine Dickstoff-Pumpleitung (102) der Baumaschine (100) angeordnet ist, und
- eine Dickstoff-Pumpeinheit (105), an welcher die Pumpseite (101) angeordnet ist, wobei die Dickstoff-Pumpeinheit (105) zum pumpseitigen Versorgen der Dickstoff-Förderleitung (101) mit Dickstoff (D) und/oder Flüssigkeit (F) ausgebildet ist,
- eine Ventileinrichtung (1) nach einem der vorhergehenden Ansprüche, wobei die Ventileinrichtung (1) zwischen der Pumpseite (101) und der Dickstoff-Förderleitung (103), insbesondere zwischen der Dickstoff-Pumpleitung (102) und der Dickstoff-Förderleitung (103), angeordnet ist,
- wobei die Pumpseite (101) an den ersten Anschluss (K1) für einen Fluss von Dickstoff (D) angeschlossen ist und die Dickstoff-Förderleitung (103) an den dritten Anschluss (K3) für einen Fluss von Dickstoff (D) angeschlossen ist.

11. Verfahren zum, insbesondere automatischen, Reinigen einer Baumaschine (100) nach dem vorhergehenden Anspruch, wobei das Verfahren die Schritte aufweist:
a) Verstellen des Stellkörpers (3) von seiner ersten Schaltstellung (P1) in seine zweite Schaltstellung (P2) relativ zum Basiskörper (2),
b) zeitlich nach Durchführung des Schritts a): Übertragen einer Medientrenneinrichtung (M, M1) von der Übertragungseinrichtung (4, 4A) in den dritten Anschluss (K3), so dass die Medientrenneinrichtung (M, M1) an/in der Dickstoff-Förderleitung (103) angeordnet wird,
c) zeitlich nach Durchführung des Schritts b): Erzeugen eines über die Medientrenneinrichtung (M, M1) abfallenden Druckgefälles, um die Medientrenneinrichtung (M, M1) unter Verdrängung von in dem dritten Anschluss (K3) und/oder in der Dickstoff-Förderleitung (103) befindlichem Dickstoff (D) relativ zur Ventileinrichtung (1) durch die Dickstoff-Förderleitung (103) hindurch entlang des Druckgefälles zu verstellen.

12. Verfahren nach dem vorhergehenden Anspruch,
- wobei der Schritt b) zusätzlich aufweist:
Übertragen einer weiteren Medientrenneinrichtung (M, M2) von einer weiteren Übertragungseinrichtung (4, 4B) in den ersten Anschluss (K1), so dass die weitere Medientrenneinrichtung (M, M2) an/in der Pumpseite (101), insbesondere an einer pumpseitigen Dickstoff-Pumpleitung (102), angeordnet wird;
- wobei der Schritt c) zusätzlich umfasst:
Erzeugen eines über die weitere Medientrenneinrichtung (M, M2) abfallenden Druckgefälles, um die weitere Medientrenneinrichtung (M, M2) unter Verdrängung von in dem ersten Anschluss (K1) und/oder pumpseitig vorhandenem Dickstoff (D) relativ zur Ventileinrichtung (1) pumpseitig entlang des Druckgefälles zu verstellen.

13. Verfahren nach dem vorhergehenden Anspruch,
wobei bei Durchführung des Schritts c)
- zum Erzeugen des Druckgefälles pumpseitig vorhandener Dickstoff (D), insbesondere mittels der Dickstoff-Pumpeinheit (105) der Baumaschine (100), abgesaugt wird, so dass die weitere Medientrenneinrichtung (M, M2) pumpseitig durch das Absaugen von der Ventileinrichtung (1) weg verstellt wird, und
- wenn der Dickstoff (D), insbesondere im Wesentlichen vollständig, pumpseitig abgesaugt worden ist, die Pumpseite (101) und die pumpseitig angeordnete weitere Medientrenneinrichtung (M, M2), insbesondere mittels der Dickstoff-Pumpeinheit (105), mit einer Flüssigkeit (F), insbesondere mit Frisch- oder Brauchwasser, derart beaufschlagt werden, dass die weitere Medientrenneinrichtung (M, M2) pumpseitig zu der Ventileinrichtung (1) hin zurückverstellt und anschließend über die Ventileinrichtung (1) in die weitere Übertragungseinrichtung (4, 4B) befördert wird.

14. Verfahren nach einem der beiden vorhergehenden Ansprüche,
- wobei bei Durchführung des Schritts c) zeitlich vor dem Verstellen der an der Dickstoff-Förderleitung (103) angeordneten Medientrenneinrichtung (M, M1) ein Verstellen des Stellkörpers (3) von seiner zweiten Schaltstellung (P2) in seine erste Schaltstellung (P1) relativ zum Basiskörper (2) erfolgt,
- wobei zum Verstellen der an der Dickstoff-Förderleitung (103) angeordneten Medientrennrichtung (M, M1) durch die Dickstoff-Förderleitung (103) hindurch die Dickstoff-Förderleitung (103) über die Pumpseite (102) und die Ventileinrichtung (1) mit Flüssigkeit (F) beaufschlagt wird.

15. Verfahren nach einem der drei vorhergehenden Ansprüche,
- wobei bei Durchführung des Schritts b)
- der zweite Anschluss (K2) der Ventileinrichtung (1), insbesondere mittels eines Kolbens (7) der an den zweiten Anschluss (K2) angeschlossenen Übertragungseinrichtung (4, 4A), von dem Aufnahmeraum (5) der an dem zweiten Anschluss (K2) angeschlossenen Übertragungseinrichtung (4, 4A) fluiddicht getrennt wird,
- der zweite Anschluss (K2), insbesondere mittels eines Flüssigkeitsventils der Ventileinrichtung (1), fluidleitend mit einer Flüssigkeitsleitung (106) der Baumaschine (100) verbunden wird, insbesondere wobei die Flüssigkeitsleitung (106) von einer Flüssigkeits-Pumpeinheit (104) der Baumaschine (100) mit Flüssigkeit (F) gespeist wird, und
- wobei bei Durchführung des Schritts c) die Dickstoff-Förderleitung (103) und die darin angeordnete Medientrenneinrichtung (M, M1) über die Flüssigkeitsleitung (106) mit Flüssigkeit (F) beaufschlagt werden, um das über die Medientrenneinrichtung (M, M1) abfallende Druckgefälle zu erzeugen.

## Claims

1. Valve device (1), in particular a pig loader (12), for joining to a thick-matter conveying line (103) of a construction machine (100) for conveying thick matter (D), wherein the valve device (1) has:
- a base body (2) and an, in particular slide-like, adjustment body (3), which is adjustable relative to the base body (2) between a first switching position (P1) and a second switching position (P2), and
- an automatic, in particular active, transfer device (4, 4A) with a receiving space (5) for receiving a media separation device (M, M1), in particular a pig,
- wherein the base body (2) has a first connector (K1) for connection to a pump side (101) of the construction machine (100), in particular to a pump-side thick-matter pump line (102) of the construction machine (100), through which pump line thick matter (D) is able to flow, and has a second connector (K2),
- wherein the adjustment body (3) has a third connector (K3) for connection of the thick-matter conveying line (103) of the construction machine (100),
- wherein the second connector (K2) and the receiving space (5) are connected to one another,
- wherein, in the first switching position (P1), the first connector (K1) and the third connector (K3) are connected to one another for a flow at least of thick matter (D) between the first connector (K1) and the third connector (K3),
- wherein, in the second switching position (P2), the second connector (K2) and the third connector (K3) are connected to one another for automatic transfer of the media separation device (M, M1) between the third connector (K3) and the transfer device (4, 4A), in particular via the second connector (K2),
**characterized in that**
- the transfer device (4, 4A, 4B) has a piston (7) which is guided in the receiving space (5) so as to be adjustable relative to a housing (6) of the transfer device (4, 4A, 4B) in such a way that, in particular in the second switching position (P2), the media separation device (M, M1, M2) is transferable from the receiving space (5) by adjustment of the piston (7) relative to the housing (6), **in that**
- the piston (7) is adjustable relative to a housing (6) of the transfer device (4, 4A, 4B) between a first and a second piston position (S1, S2) along an adjustment direction (R), **in that**
- the piston (7), in the first piston position (S1) along the adjustment direction (R), is arranged at a distance from the connector (K2, K4, K5) that is connected to the receiving space (5), and **in that**
- the piston (7), in the second piston position (S2) along the adjustment direction (R), is received in the respective connector (K2, K4, K5) in such a way that this connector (K2, K4, K5) is separated in a fluid-tight manner from the receiving space (5) by means of the piston (7).

2. Valve device (1) according to the preceding claim,
- wherein the base body (2) has a fourth connector (K4), which is in particular unused, or
- wherein the adjustment body (3) has a fourth connector (K4), wherein the fourth connector (K4) is connected in the second switching position (P2) to the first connector (K1), and in the first switching position (P1) to external surroundings of the valve device (1) so as to face the base body (2).

3. Valve device (1) according to either of the preceding claims,
- wherein the adjustment body (3) has a fifth connector (K5),
- wherein the fifth connector (K5) is connected in the first switching position (P1) to the second connector (K2), or wherein the fifth connector (K5) is connected in the first switching position (P1) to a fourth connector (K4) of the base body (2) and in the second switching position (P2) to the first connector (K1).

4. Valve device (1) according to either of the two preceding claims,
- wherein the valve device (1) has a further, in particular passive, transfer device (4, 4B) with a further receiving space (5) for receiving a further media separation device (M, M2), in particular a pig,
- wherein the fourth connector (K4) or the fifth connector (K5) is connected to the further receiving space (5) so that the further media separation device (M, M2) is transferable between the further receiving space (5) and the fourth connector (K4) or the fifth connector (K5) towards the pump side (101).

5. Valve device (1) according to one of the preceding claims,
wherein the transfer device (4, 4A, 4B) has a housing (6), wherein the housing (6) delimits the receiving space (5) of the transfer device (4, 4A, 4B), in particular in a liquid-permeable and/or thick-matter-permeable manner.

6. Valve device (1) according to one of the preceding claims,
- wherein the transfer device (4, 4A, 4B) has a sensor device (8) for detecting at least one piston position of the piston (7) relative to the housing (6), and/or
- wherein the transfer device (4, 4A, 4B) has a drive device (9), wherein the drive device (9) is configured for automatic adjustment of the piston (7) relative to the housing (6), in particular wherein the drive device (9) has a hydraulic cylinder (10) and/or a spindle drive.

7. Valve device (1) according to the preceding claim,
- wherein the piston (7), in the second piston position (S2) along the adjustment direction (R), terminates flush with a separating surface (T) of the valve device (1), wherein the base body (2) and the adjustment body (3) are in contact with one another in a slidingly movable manner in the separating surface (T).

8. Valve device (1) according to one of the preceding claims,
- wherein the base body (2) has a fluid channel (KF) which opens out into the second connector (K2) and through which liquid (F) is able to flow, in particular wherein the fluid channel (KF) is able to be supplied with liquid (F) by means of a pump unit (104) of the construction machine (100),
- in particular wherein the valve device (1) has a liquid valve, wherein the fluid channel (KF) is able to be closed off in a fluid-tight manner by means of the liquid valve so as to separate the fluid channel (KF) from the second connector (K2) in a fluid-tight manner.

9. Valve device (1) according to one of the preceding claims,
wherein the transfer device (4, 4A, 4B) has a magazine (15) for pre-loading media separation devices (M, M1, M2).

10. Construction machine (100) for conveying thick matter (D), wherein the construction machine (100) has,
- a thick-matter conveying line (103) through which thick matter (D) is able to flow,
- a pump side (101) on which in particular a thick-matter pump line (102) of the construction machine (100) is arranged, and
- a thick-matter pump unit (105) at which the pump side (101) is arranged, wherein the thick-matter pump unit (105) is configured for supplying on the pump side thick matter (D) and/or liquid (F) to the thick-matter conveying line (101),
- a valve device (1) according to one of the preceding claims, wherein the valve device (1) is arranged between the pump side (101) and the thick-matter conveying line (103), in particular between the thick-matter pump line (102) and the thick-matter conveying line (103),
- wherein the pump side (101) is connected to the first connector (K1) for a flow of thick matter (D) and the thick-matter conveying line (103) is connected to the third connector (K3) for a flow of thick matter (D).

11. Method for in particular automatic cleaning of a construction machine (100) according to the preceding claim, wherein the method comprises the steps of:
a) adjusting the adjustment body (3) from its first switching position (P1) into its second switching position (P2) relative to the base body (2),
b) temporally after carrying out step a): transferring a media separation device (M, M1) from the transfer device (4, 4A) into the third connector (K3), so that the media separation device (M, M1) is arranged at/in the thick-matter conveying line (103),
c) temporally after carrying out step b): generating a pressure gradient which is negative over the media separation device (M, M1) in order to adjust the media separation device (M, M1) under the action of displacement of thick matter (D), situated in the third connector (K3) and/or in the thick-matter conveying line (103), relative to the valve device (1) through the thick-matter conveying line (103) along the pressure gradient.

12. Method according to the preceding claim,
- wherein step b) additionally comprises:
transferring a further media separation device (M, M2) from a further transfer device (4, 4B) into the first connector (K1), so that the further media separation device (M, M2) is arranged at/in the pump side (101), in particular at a pump-side thick-matter pump line (102);
- wherein step c) additionally comprises:
generating a pressure gradient which is negative over the further media separation device (M, M2) in order to adjust the further media separation device (M, M2) under the action of displacement of thick matter (D), present in the first connector (K1) and/or on the pump side, relative to the valve device (1) on the pump side along the pressure gradient.

13. Method according to the preceding claim,
wherein, when carrying out step c),
- for generating the pressure gradient, thick matter (D) present on the pump side is extracted by suction, in particular by means of the thick-matter pump unit (105) of the construction machine (100), so that the further media separation device (M, M2) is adjusted away from the valve device (1) on the pump side by way of the extraction by suction, and
- when the thick matter (D) has been extracted by suction, in particular substantially completely, on the pump side, a liquid (F), in particular fresh water or service water, is applied, in particular by means of the thick-matter pump unit (105), to the pump side (101) and the further media separation device (M, M2) arranged on the pump side in such a way that the further media separation device (M, M2) is adjusted on the pump side back towards the valve device (1) and is subsequently transported into the further transfer device (4, 4B) via the valve device (1).

14. Method according to either of the two preceding claims,
- wherein, when carrying out step c), temporally before adjusting the media separation device (M, M1) arranged at the thick-matter conveying line (103), the adjustment body (3) is adjusted from its second switching position (P2) into its first switching position (P1) relative to the base body (2),
- wherein, for adjusting the media separation device (M, M1) arranged at the thick-matter conveying line (103), liquid (F) is applied to the thick-matter conveying line (103) through the thick-matter conveying line (103) via the pump side (102) and the valve device (1).

15. Method according to one of the three preceding claims,
- wherein, when carrying out step b),
- the second connector (K2) of the valve device (1) is separated, in particular by means of a piston (7) of the transfer device (4, 4A) connected to the second connector (K2), in a fluid-tight manner from the receiving space (5) of the transfer device (4, 4A) connected to the second connector (K2),
- the second connector (K2) is connected, in particular by means of a liquid valve of the valve device (1), in a fluid-conducting manner to a liquid line (106) of the construction machine (100), in particular wherein the liquid line (106) is fed with liquid (F) from a liquid pump unit (104) of the construction machine (100), and
- wherein, when carrying out step c), liquid (F) is applied to the thick-matter conveying line (103) and the media separation device (M, M1) arranged therein via the liquid line (106) in order to generate the pressure gradient that is negative over the media separation device (M, M1).

## Revendications

1. Dispositif de vanne (1), notamment chargeur de racleur (12), destiné à être rattaché à une conduite de transport de matière épaisse (103) d'une machine de construction (100) pour transporter de la matière épaisse (D), le dispositif de vanne (1) présentant :
- un corps de base (2) et un corps de réglage (3), notamment de type coulisse, pouvant être déplacé par rapport au corps de base (2) entre une première position de commutation (P1) et une deuxième position de commutation (P2), et
- un dispositif de transfert automatique (4, 4A), notamment actif, avec un espace de réception (5) pour recevoir un dispositif de séparation de milieux (M, M1), notamment un racleur,
- le corps de base (2) présentant un premier raccord (K1) pour le raccordement à un côté de pompage (101) de la machine de construction (100), notamment à une conduite de pompage de matière épaisse (102) côté pompage de la machine de construction (100) pouvant être traversée par de la matière épaisse (D), et un deuxième raccord (K2),
- le corps de réglage (3) présentant un troisième raccord (K3) pour raccorder la conduite de transport de matière épaisse (103) de la machine de construction (100),
- le deuxième raccord (K2) et l'espace de réception (5) étant raccordés l'un à l'autre,
- dans la première position de commutation (P1), le premier raccord (K1) et le troisième raccord (K3) étant reliés l'un à l'autre pour un écoulement au moins de matière épaisse (D) entre le premier raccord (K1) et le troisième raccord (K3),
- dans la deuxième position de commutation (P2), le deuxième raccord (K2) et le troisième raccord (K3) étant reliés l'un à l'autre pour un transfert automatique du dispositif de séparation de milieux (M, M1) entre le troisième raccord (K3) et le dispositif de transfert (4, 4A), notamment par l'intermédiaire du deuxième raccord (K2),
**caractérisé en ce que**
- le dispositif de transfert (4, 4A, 4B) présente un piston (7) qui est guidé de manière réglable dans l'espace de réception (5) par rapport à un boîtier (6) du dispositif de transfert (4, 4A, 4B) de telle sorte que, notamment dans la deuxième position de commutation (P2), le dispositif de séparation de milieux (M, M1, M2) peut être transféré hors de l'espace de réception (5) par déplacement du piston (7) par rapport au boîtier (6), **en ce que**
- le piston (7) peut être déplacé par rapport à un boîtier (6) du dispositif de transfert (4, 4A, 4B) entre une première et une deuxième position de piston (S1, S2) le long d'une direction de réglage (R), **en ce que**
- le piston (7) est agencé dans la première position de piston (S1) le long de la direction de réglage (R) à distance du raccord (K2, K4, K5) raccordé à l'espace de réception (5), et **en ce que**
- le piston (7) est reçu dans la deuxième position de piston (S2) le long de la direction de réglage (R) dans le raccord respectif (K2, K4, K5) de telle sorte que ce raccord (K2, K4, K5) est séparé de manière étanche aux fluides de l'espace de réception (5) au moyen du piston (7).

2. Dispositif de vanne (1) selon la revendication précédente,
- le corps de base (2) présentant un quatrième raccord (K4), notamment inutilisé, ou
- le corps de réglage (3) présentant un quatrième raccord (K4), le quatrième raccord (K4) étant relié au premier raccord (K1) dans la deuxième position de commutation (P2) et à un environnement extérieur du dispositif de vanne (1) en face du corps de base (2) dans la première position de commutation (P1).

3. Dispositif de vanne (1) selon l'une quelconque des revendications précédentes,
- le corps de réglage (3) présentant un cinquième raccord (K5),
- le cinquième raccord (K5) étant relié au deuxième raccord (K2) dans la première position de commutation (P1), ou le cinquième raccord (K5) étant relié à un quatrième raccord (K4) du corps de base (2) dans la première position de commutation (P1) et au premier raccord (K1) dans la deuxième position de commutation (P2).

4. Dispositif de vanne (1) selon l'une quelconque des deux revendications précédentes,
- le dispositif de vanne (1) présentant un autre dispositif de transfert (4, 4B), notamment passif, avec un autre espace de réception (5) pour recevoir un autre dispositif de séparation de milieux (M, M2), notamment un racleur,
- le quatrième raccord (K4) ou le cinquième raccord (K5) étant raccordé à l'autre espace de réception (5), de telle sorte que l'autre dispositif de séparation de milieux (M, M2) peut être transféré entre l'autre espace de réception (5) et le quatrième raccord (K4) ou le cinquième raccord (K5) vers le côté pompage (101).

5. Dispositif de vanne (1) selon l'une quelconque des revendications précédentes,
le dispositif de transfert (4, 4A, 4B) présentant un boîtier (6), le boîtier (6) délimitant l'espace de réception (5) du dispositif de transfert (4, 4A, 4B), notamment de manière perméable aux liquides et/ou aux matières épaisses.

6. Dispositif de vanne (1) selon l'une quelconque des revendications précédentes,
- le dispositif de transfert (4, 4A, 4B) présentant un dispositif de détection (8) pour détecter au moins une position de piston du piston (7) par rapport au boîtier (6), et/ou
- le dispositif de transfert (4, 4A, 4B) présentant un dispositif d'entraînement (9), le dispositif d'entraînement (9) étant réalisé pour déplacer automatiquement le piston (7) par rapport au boîtier (6), notamment le dispositif d'entraînement (9) présentant un vérin hydraulique (10) et/ou un entraînement à broche.

7. Dispositif de vanne (1) selon la revendication précédente,
- le piston (7) se terminant dans la deuxième position de piston (S2) le long de la direction de réglage (R) à fleur d'une surface de séparation (T) du dispositif de vanne (1), le corps de base (2) et le corps de réglage (3) étant en contact l'un avec l'autre de manière coulissante dans la surface de séparation (T).

8. Dispositif de vanne (1) selon l'une quelconque des revendications précédentes,
- le corps de base (2) présentant un canal de fluide (KF) débouchant dans le deuxième raccord (K2) et pouvant être traversé par un liquide (F), notamment le canal de fluide (KF) pouvant être alimenté en liquide (F) au moyen d'une unité de pompage (104) de la machine de construction (100),
- notamment le dispositif de vanne (1) présentant une vanne de liquide, le canal de fluide (KF) pouvant être fermé de manière étanche aux fluides au moyen de la vanne de liquide afin de séparer de manière étanche aux fluides le canal de fluide (KF) du deuxième raccord (K2).

9. Dispositif de vanne (1) selon l'une quelconque des revendications précédentes,
le dispositif de transfert (4, 4A, 4B) présentant un magasin (15) pour précharger des dispositifs de séparation de milieux (M, M1, M2).

10. Machine de construction (100) pour transporter de la matière épaisse (D), la machine de construction (100) présentant,
- une conduite de transport de matière épaisse (103) pouvant être traversée par de la matière épaisse (D),
- un côté de pompage (101), sur lequel est notamment agencée une conduite de pompage de matière épaisse (102) de la machine de construction (100), et
- une unité de pompage de matière épaisse (105), sur laquelle est agencée le côté de pompage (101), l'unité de pompage de matière épaisse (105) étant réalisée pour alimenter, côté pompage, la conduite de transport de matière épaisse (101) en matière épaisse (D) et/ou en liquide (F),
- un dispositif de vanne (1) selon l'une quelconque des revendications précédentes, le dispositif de vanne (1) étant agencé entre le côté de pompage (101) et la conduite de transport de matière épaisse (103), notamment entre la conduite de pompage de matière épaisse (102) et la conduite de transport de matière épaisse (103),
- le côté de pompage (101) étant raccordé au premier raccord (K1) pour un écoulement de matière épaisse (D) et la conduite de transport de matière épaisse (103) étant raccordée au troisième raccord (K3) pour un écoulement de matière épaisse (D).

11. Procédé de nettoyage, notamment automatique, d'une machine de construction (100) selon la revendication précédente, le procédé présentant les étapes suivantes :
a) le déplacement du corps de réglage (3) de sa première position de commutation (P1) à sa deuxième position de commutation (P2) par rapport au corps de base (2),
b) temporellement après l'exécution de l'étape a) : le transfert d'un dispositif de séparation de milieux (M, M1) depuis le dispositif de transfert (4, 4A) dans le troisième raccord (K3) de telle sorte que le dispositif de séparation de milieux (M, M1) soit agencé sur/dans la conduite de transport de matière épaisse (103),
c) temporellement après l'exécution de l'étape b) : la génération d'un gradient de pression descendant à travers le dispositif de séparation de milieux (M, M1) pour déplacer le dispositif de séparation de milieux (M, M1) par rapport au dispositif de vanne (1) à travers la conduite de transport de matière épaisse (103) le long du gradient de pression en refoulant de la matière épaisse (D) se trouvant dans le troisième raccord (K3) et/ou dans la conduite de transport de matière épaisse (103).

12. Procédé selon la revendication précédente,
- l'étape b) présentant en outre :
le transfert d'un autre dispositif de séparation de milieux (M, M2) depuis un autre dispositif de transfert (4, 4B) dans le premier raccord (K1) de telle sorte que l'autre dispositif de séparation de milieux (M, M2) soit agencé sur/dans le côté pompage (101), notamment sur une conduite de pompage de matière épaisse (102) côté pompage ;
- l'étape c) comprenant en outre :
la génération d'un gradient de pression descendant à travers l'autre dispositif de séparation de milieux (M, M2), afin de déplacer l'autre dispositif de séparation de milieux (M, M2) par rapport au dispositif de vanne (1), côté pompage, le long du gradient de pression, en refoulant la matière épaisse (D) présente dans le premier raccord (K1) et/ou côté pompage.

13. Procédé selon la revendication précédente,
lors de l'exécution de l'étape c)
- pour générer le gradient de pression, de la matière épaisse (D) présente côté pompage étant aspirée, notamment au moyen de l'unité de pompage de matière épaisse (105) de la machine de construction (100), de telle sorte que l'autre dispositif de séparation de milieux (M, M2) est déplacé côté pompage par l'aspiration en s'éloignant du dispositif de vanne (1), et
- lorsque la matière épaisse (D) a été aspirée, notamment essentiellement en totalité, côté pompage, le côté pompage (101) et l'autre dispositif de séparation de milieux (M, M2) agencé côté pompage sont sollicités, notamment au moyen de l'unité de pompage de matière épaisse (105), avec un liquide (F), notamment avec de l'eau fraîche ou de l'eau industrielle, de telle sorte que l'autre dispositif de séparation de milieux (M, M2) est ramené côté pompage vers le dispositif de vanne (1) et est ensuite transporté dans l'autre dispositif de transfert (4, 4B) par l'intermédiaire du dispositif de vanne (1).

14. Procédé selon l'une quelconque des deux revendications précédentes,
- lors de l'exécution de l'étape c), un déplacement du corps de réglage (3) de sa deuxième position de commutation (P2) dans sa première position de commutation (P1) par rapport au corps de base (2) étant effectué temporellement avant le déplacement du dispositif de séparation de milieux (M, M1) agencé sur la conduite de transport de matière épaisse (103),
- pour déplacer le dispositif de séparation de milieux (M, M1) agencé sur la conduite de transport de matière épaisse (103), la conduite de transport de matière épaisse (103) étant sollicitée avec du liquide (F) à travers la conduite de transport de matière épaisse (103) par l'intermédiaire du côté pompage (102) et du dispositif de vanne (1).

15. Procédé selon l'une quelconque des trois revendications précédentes,
- lors de la réalisation de l'étape b)
- le deuxième raccord (K2) du dispositif de vanne (1) étant séparé de manière étanche aux fluides, notamment au moyen d'un piston (7) du dispositif de transfert (4, 4A) raccordé au deuxième raccord (K2), de l'espace de réception (5) du dispositif de transfert (4, 4A) raccordé au deuxième raccord (K2),
- le deuxième raccord (K2) étant relié, notamment au moyen d'une vanne de liquide du dispositif de vanne (1), de manière à conduire le fluide, à une conduite de liquide (106) de la machine de construction (100), notamment la conduite de liquide (106) étant approvisionnée en liquide (F) par une unité de pompage de liquide (104) de la machine de construction (100), et
- lors de l'exécution de l'étape c), la conduite de transport de matière épaisse (103) et le dispositif de séparation de milieux (M, M1) agencé dans celle-ci étant sollicités avec du liquide (F) par l'intermédiaire de la conduite de liquide (106) afin de générer le gradient de pression descendant à travers le dispositif de séparation de milieux (M, M1).
